(19) Europäisches Patentamt
European Patent Office
Office européen des brevets

(11) **EP 4 557 317 A1**

(12) **EUROPEAN PATENT APPLICATION**
published in accordance with Art. 153(4) EPC

(43) Date of publication:
**21.05.2025 Bulletin 2025/21**

(21) Application number: **23839590.9**

(22) Date of filing: **10.07.2023**

(51) International Patent Classification (IPC):
*H01B 13/00* (2006.01)        *H01G 9/00* (2006.01)
*H01G 9/025* (2006.01)        *H01G 11/56* (2013.01)

(52) Cooperative Patent Classification (CPC):
**H01B 13/00; H01G 9/00; H01G 9/025; H01G 11/56;**
Y02E 60/10

(86) International application number:
**PCT/JP2023/025368**

(87) International publication number:
**WO 2024/014418 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.07.2022  JP 2022112224**

(71) Applicant: **Idemitsu Kosan Co.,Ltd.**
**Tokyo 100-8321 (JP)**

(72) Inventors:
• **KAGOTA Yasuhito**
**Tokyo 100-8321 (JP)**
• **KASATANI Yuichi**
**Tokyo 100-8321 (JP)**
• **ISEKI Yusuke**
**Tokyo 100-8321 (JP)**

(74) Representative: **Vossius & Partner**
**Patentanwälte Rechtsanwälte mbB**
**Siebertstrasse 3**
**81675 München (DE)**

(54) **METHOD FOR MANUFACTURING SULFIDE SOLID ELECTROLYTE**

(57)    Provided is a method for producing a sulfide solid electrolyte, which can efficiently produce a sulfide solid electrolyte having a high ionic conductivity while using a liquid phase method and can be easily mass-produced, and which includes the steps of: obtaining an electrolyte precursor-containing substance containing a powder of the electrolyte precursor by mixing a raw material-containing substance containing a lithium atom, a phosphorus atom, a sulfur atom, and a halogen atom with a complexing agent; and then heating the electrolyte precursor-containing substance in a heated air stream.

[Fig. 1]

Pneumatic conveying dryer · Heating Object · Gas · Mixer · Blower · Heater · Gas · Exhaust · Bag Filter · Powder

EP 4 557 317 A1

**Description**

Technical Field

The present invention relates to a method for producing a sulfide solid electrolyte.

Background Art

In recent years, with the rapid spread of information-related devices such as personal computers, video cameras, and mobile phones, communication devices, and the like, the development of batteries used as a power source for the devices has been regarded as important. Conventionally, electrolytic solution containing flammable organic solvents have been used in batteries used for such applications, however by making the battery all-solid, a battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly classified into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. For example, among the liquid phase methods, as a homogeneous method, a method of dissolving a solid electrolyte in a solvent and reprecipitating the solid electrolyte is known (for example, see PTL 1), and further, as a heterogeneous method, a method of reacting a solid electrolyte raw material such as lithium sulfide in a solvent containing a polar aprotic solvent is known (for example, see PTLs 2 and 3, and NPL 1).

Furthermore, a method for producing a solid electrolyte which contains mixing a complexing agent and a solid electrolyte raw material to prepare an electrolyte precursor by using a specific compound having amino groups as the complexing agent (for example, see PTL 4), and a method for producing a solid electrolyte which includes drying a slurry containing a complexing agent and an electrolyte precursor by fluidized drying using media particles (for example, see PTL 5) are also known.

Citation List

Patent Literature

PTL 1:JP 2014-191899 A
PTL 2:WO 2014/192309 A
PTL 3:WO 2018/054709 A
PTL 4:WO 2020/105737 A
PTL 5:WO 2021/230189 A

Non Patent Literature

NPL 1: "CHEMISTRY OF MATERIALS", 2017, No. 29, pp. 1830-1835

Summary of Invention

Technical Problem

The present invention has been made in view of such a situation, and an object of the present invention is to provide a production method in which a sulfide solid electrolyte having high ionic conductivity is efficiently produced while adopting a liquid phase method, and mass production is easy.

Solution to Problem

The method for producing a sulfide solid electrolyte according to the present invention is a method for producing a sulfide solid electrolyte, including:

obtaining an electrolyte precursor-containing substance by mixing a raw material-containing substance containing a lithium atom, a phosphorus atom, a sulfur atom, and a halogen atom with a complexing agent; and then heating the electrolyte precursor-containing substance in a heated air stream.

Advantageous Effects of Invention

According to the present invention, it is possible to provide a production method in which a sulfide solid electrolyte having high ionic conductivity is efficiently produced while adopting a liquid phase method, and mass production is easy.

Brief Description of Drawings

Fig. 1 is a flow diagram of an apparatus including a pneumatic conveying dryer and a bag filter used in Example 1.
Fig. 2 is an X-ray diffraction spectrum of the crystalline sulfide solid electrolyte obtained in Example 3.
Fig. 3 is X-ray diffraction spectra of the crystalline sulfide solid electrolytes obtained in Examples 3 to 8.
Fig. 4 is X-ray diffraction spectra of the crystalline sulfide solid electrolytes obtained in Comparative Examples 1 and 2.
Fig. 5 is a flow diagram of an apparatus including a fluidized bed dryer and a bag filter used in Comparative Example 3.
Fig. 6 is X-ray diffraction spectra of the crystalline sulfide solid electrolytes obtained in Comparative Example 3, and Examples 3 and 6.
Fig. 7 is X-ray diffraction spectra of the crystalline sulfide solid electrolytes obtained in Examples 9 to 15.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more preferable to combine the preferred ones with each other.

(Findings Obtained by the Inventors to Reach the Present Invention)

As a result of intensive studies to solve the above-described problems, the present inventors have found the following matters, and have completed the present invention.
In order to put all-solid batteries into practical use in recent years, a liquid phase method has attracted attention as a method capable of being simply synthesized in a large amount in addition to versatility and applicability.
The liquid phase method has the above-described advantages, on the other hand, there is a problem in that it is difficult to achieve high ionic conductivity compared to the solid phase method due to reasons such as decomposition and loss of some of the solid electrolyte components during precipitation because of dissolving the solid electrolyte. For example, in the homogeneous method, the raw materials and solid electrolyte are once completely dissolved, therefore the components can be uniformly dispersed in the liquid. However, in the subsequent precipitation step, precipitation progresses according to the solubility specific to each component, therefore it is extremely difficult to precipitate while maintaining the dispersed state of the components. As a result, each component separates and precipitates. Further, in the homogeneous method, the affinity between the solvent and lithium becomes too strong, making it difficult for the solvent to evaporate even when dried after precipitation. For these reasons, the homogeneous method has a problem in that the ionic conductivity of the solid electrolyte significantly declines. Even in the heterogeneous method of solid-liquid coexistence, a part of the solid electrolyte dissolves, therefore there is a problem in that separation occurs due to elution of specific components making it difficult to obtain a desired solid electrolyte.
Regarding the liquid phase method (heterogeneous method), for example, in the method of producing a sulfide solid electrolyte through an electrolyte precursor using a complexing agent described in PTL4, the step of removing the complexing agent becomes necessary. The present inventors have focused on a method of removing a complexing agent in a method of producing a sulfide solid electrolyte through an electrolyte precursor using a complexing agent.
In the production method described in PTL4, removing of the complexing agent is performed by drying the electrolyte precursor-containing substance of slurry form under vacuum and at room temperature to make a powdered electrolyte precursor, and then heating the electrolyte precursor at 120°C under vacuum (such as Example 1), specifically, performed by using a jacket type heater (such as a vibration dryer) under vacuum. In this way, when a complexing agent is used, it is not possible to remove the complexing agent from the electrolyte precursor by mere drying, therefore a jacket type heater (such as a vibration dryer) is used to heat. However, even though such heaters can remove the complexing agent, when the wall surface inside the heater becomes locally high temperature, there were some cases in which halogen compounds contained in the solid electrolyte aggregate, resulting in deterioration of the solid electrolyte. Therefore, there are restrictions on the temperature conditions when removing the complexing agent, and there is room for improvement in terms of efficiently producing a solid electrolyte.

Furthermore, with the increasing demand for sulfide solid electrolytes, there is a need for mass production. However, in the conventional method, since heating is performed under vacuum, the complexing agent is removed in an environment where heat is only transferred by the powder being contact with inner wall surface (heat transfer surface) of a jacket type heater, therefore, there was also concern about a large impact for increasing size of the equipment, making it being not able to sufficiently cope with it.

Regarding the removal of the complexing agent, no complexing agent is used in PTLs 1 to 3. Further, although it is assumed that a solvent is used in the reaction of solid electrolyte raw materials, no study has been made on a method for removing the solvent.

In the production method described in PTL 5, a slurry containing a complexing agent and an electrolyte precursor is dried by fluidized drying using media particles. However, in the production method described in PTL5, since the complexing agent is not removed from the electrolyte precursor when drying the slurry, the removal of the complexing agent from the electrolyte precursor obtained by the drying is performed by heating to 110°C under vacuum, similar to the production method described in PTL4 described above (such as Example 1), specifically, performed by using a jacket type heater (such as a vibration dryer) under vacuum. Therefore, the same problem as the production method described in PTL4 described above occurs.

Therefore, the present inventors have investigated a method for removing the complexing agent from the electrolyte precursor formed from the complexing agent and the solid electrolyte raw material, and have found that the complexing agent can be removed from the electrolyte precursor contained in the electrolyte precursor-containing substance by supplying the electrolyte precursor-containing substance into a heated air stream. When the complexing agent is removed from the electrolyte precursor by heating in a heated air stream, it is possible to suppress the deterioration of the solid electrolyte due to contact between the powder of the solid electrolyte and the wall surface of a jacket type heater (such as a vibration dryer) that becomes locally high temperature.

In addition, since the heating is performed using the heated air stream, it can be expected that the complexing agent can be removed from the electrolyte precursor-containing substance regardless of the scale if the supply amount of the heated air stream, particularly the flow velocity, is maintained within a certain range. Therefore, there is also an advantage that it is easy to cope with increasing size of the equipment.

Based on the above findings, it has been found that in a method for producing a sulfide solid electrolyte by a liquid phase method (heterogeneous method) in which a complexing agent and a solid electrolyte raw material are reacted, by performing the removal of the complexing agent from the powder of the electrolyte precursor by heating in a heated air stream, a sulfide solid electrolyte having high ionic conductivity can be obtained efficiently while adopting the liquid phase method, and mass production becomes easy.

(Regarding Various Aspects of the Present Embodiment)

The method for producing a sulfide solid electrolyte according to a first aspect of the present embodiment is a method for producing a sulfide solid electrolyte, including:

obtaining an electrolyte precursor-containing substance by mixing a raw material-containing substance containing a lithium atom, a phosphorus atom, a sulfur atom, and a halogen atom with a complexing agent; and then

heating the electrolyte precursor-containing substance in a heated air stream.

In a method for producing a sulfide solid electrolyte of the present embodiment, the electrolyte precursor-containing substance obtained by mixing the solid electrolyte raw material and the complexing agent may contain a complexing agent, a solid electrolyte raw material, and a solvent that did not contribute to the formation of the electrolyte precursor, together with the electrolyte precursor. In the method for producing a sulfide solid electrolyte of the present embodiment, the complexing agent can be removed from the electrolyte precursor by heating in a heated air stream. In addition, in a case where electrolyte precursor-containing substance includes a complexing agent and a solvent that do not contribute to the formation of the electrolyte precursor and remain, the complexing agent and the solvent can also be removed.

The electrolyte precursor is a precursor of the sulfide solid electrolyte obtained by the production method of the present embodiment, and can become a sulfide solid electrolyte by removing the complexing agent. Herein, the complexing agent refers to an agent which complexes, that is, an agent capable of forming a complex, and refers to a compound that is likely to form a complex with the solid electrolyte raw material contained in the raw material-containing substance. Therefore, since the electrolyte precursor is obtained by mixing the raw material-containing substance and the complexing agent, more specifically, it can be said to be a complex formed by the solid electrolyte raw material via the complexing agent.

The production method of the present embodiment includes obtaining the electrolyte precursor-containing substance and then heating it in a heated air stream. The heating may be performed subsequently to the obtaining of the electrolyte precursor-containing substance, and a heating target in the heating is the electrolyte precursor-containing substance, and in a case where the drying described later is performed, the heating target is the electrolyte precursor (hereinafter, the electrolyte precursor-containing substance and the electrolyte precursor may be collectively referred to as a "heating object").

When heating the electrolyte precursor-containing substance, and removing the complexing agent from the electrolyte precursor, it is important that the electrolyte precursor-containing substance, especially the electrolyte precursor contained in the electrolyte precursor-containing substance, is heated in a heated air stream. The heated air stream has functions of drying by temperature (heat) and the air stream, and dispersing the heating object and removing the complexing agent by the air stream, and it is considered that the complexing agent can be efficiently removed from the electrolyte precursor by these functions. Since the heating object such as the electrolyte precursor-containing substance is directly brought into contact with the heated air stream to be dispersed in the heated air stream, the contact area between the electrolyte precursor and the heated air stream is increased, and thus the complexing agent contained in the electrolyte precursor can be efficiently heated. Furthermore, the air stream of the heated air stream enables the complexing agent to be quickly separated and removed. In addition, since regeneration of a complex of a substance obtained by removing the complexing agent from the electrolyte precursor and the complexing agent (hereinafter, also simply referred to as "regeneration of a complex") and generation of impurities by the electrolyte precursor and the complexing agent (hereinafter, also simply referred to as "generation of impurities") are suppressed, a sulfide solid electrolyte having high quality with less impurities and high ionic conductivity can be obtained.

The method for producing a sulfide solid electrolyte precursor composition according to a second aspect of the present embodiment includes, in the first aspect, drying the electrolyte precursor-containing substance.

In the production method of the present embodiment, in consideration of removing the complexing agent contained in the electrolyte precursor, it is important how the electrolyte precursor can be directly heated in the heated air stream. As a pre-stage of the heating in the heated air stream, the electrolyte precursor-containing substance is dried to remove the complexing agent remaining without contributing to the formation of the electrolyte precursor and the solvent used as necessary, thereby isolating the electrolyte precursor as a powder, and this can be heated in the heated air stream. By drying, the complexing agent contained in the electrolyte precursor can be heated more directly, so that the complexing agent can be separated and removed more efficiently.

As a result, the regeneration of the complex and the generation of impurities are suppressed, and it becomes easy to more efficiently obtain a sulfide solid electrolyte having high quality with few impurities and high ionic conductivity.

On the other hand, in the conventional method of heating under vacuum using a jacket type heater, heat is transferred only by the contact of the electrolyte precursor with the wall surface inside the heater, and therefore it is obvious that the contact efficiency is poor and the heat conducting efficiency is low. Therefore, it can be said that according to the production method of the present embodiment, a sulfide solid electrolyte can be obtained more efficiently than the conventional method.

Thus, the main purpose of drying in the production method of the present embodiment is to remove the complexing agent that does not contribute to the formation of the electrolyte precursor and remains, and the solvent used as necessary, from the electrolyte precursor-containing substance. Therefore, the removal of the complexing agent from the electrolyte precursor is not performed by drying, but is performed by heating in a heated air stream. On the other hand, the remaining complexing agent and the solvent used as necessary can be removed by heating in a heated air stream. In addition, it goes without saying that the complexing agent can also be removed from the electrolyte precursor by heating the electrolyte precursor-containing substance in a heated air stream.

In the method for producing a sulfide solid electrolyte according to a third aspect of the present embodiment, in the first or second aspect, a temperature of the heated air stream is 100°C or higher and 180°C or lower.

As described above, the complexing agent contained in the electrolyte precursor is easily separated from the electrolyte precursor and removed by the action of the temperature (heat) of the heated air stream and the air stream. Here, by setting the temperature of the heated air stream to be within the above temperature range, heating is particularly promoted by the action of the temperature (heat) of the heated air stream, and thus the complexing agent is easily separated from the electrolyte precursor and removed. Furthermore, since the separated gaseous complexing agent is easily discharged to the outside of the system together with the heated air stream, the regeneration of the complex and the generation of impurities due to the separated complexing agent are suppressed, and a sulfide solid electrolyte having high quality with few impurities and high ionic conductivity is easily obtained.

In the method for producing a sulfide solid electrolyte according to a fourth aspect of the present embodiment, in the first to third aspects, a supply amount of the heated air stream is 0.1 $m^3$/min or more and 500 $m^3$/min or less.

By using the heated air stream at a supply amount within the above range, it is possible to more efficiently disperse the heating object and separate and remove the complexing agent by the action of the air stream of the heated air stream. Therefore, the regeneration of the complex and the generation of impurities are suppressed, and it becomes easy to more efficiently obtain a sulfide solid electrolyte having high quality with few impurities and high ionic conductivity.

Furthermore, by suppressing the supply amount of the heated air stream within a certain range, it becomes possible to more easily cope with mass production.

In the method for producing a sulfide solid electrolyte according to a fifth aspect of the present embodiment, in the first to fourth aspects, a flow velocity of the heated air stream is 5 m/s or more and 35 m/s or less.

As described above, the complexing agent contained in the electrolyte precursor is easily separated from the electrolyte precursor and removed by the action of the temperature (heat) of the heated air stream and the air stream. Here, by setting the flow velocity of the heated air stream to the above temperature range, in particular, the separation and removal of the complexing agent by the action of the heated air stream can be more efficiently promoted. In addition, since the separated gaseous complexing agent is easily discharged to the outside of the system together with the heated air stream, the regeneration of the complex and the generation of impurities due to the separated complexing agent are suppressed, and a sulfide solid electrolyte having high quality with few impurities and high ionic conductivity is easily obtained.

In the method for producing a sulfide solid electrolyte according to a sixth aspect of the present embodiment, in the first to fifth aspects, the heating in the heated air stream is performed for 0.1 seconds or more and 1 minute or less.

In the production method of the present embodiment, by heating using a heated air stream, the complexing agent contained in the electrolyte precursor can be efficiently removed. Therefore, the heating by the heated air stream can be performed in a short time of 0.1 seconds or more and 1 minute or less.

In the method for producing a sulfide solid electrolyte according to a seventh aspect of the present embodiment, in the second to sixth aspects, the drying is performed at a temperature of 5°C or higher and 110°C or lower under normal pressure or reduced pressure.

As conditions for drying the electrolyte precursor-containing substance, by setting the pressure condition from normal pressure to reduced pressure and the temperature condition from 5°C or higher and 110°C or lower, the electrolyte precursor-containing substance can be dried more efficiently to obtain an electrolyte precursor.

The method for producing a sulfide solid electrolyte according to an eighth aspect of the present embodiment includes, in the second to seventh aspects, further heating after the heating in the heated air stream.

By heating in the heated air stream, the complexing agent is removed from the electrolyte precursor and an amorphous sulfide solid electrolyte is obtained. By further heating the electrolyte precursor separately from the heating in the heated air stream, a crystalline sulfide solid electrolyte is obtained.

In the production method of the present embodiment, an amorphous sulfide solid electrolyte and a crystalline sulfide solid electrolyte can be produced as desired.

In the method for producing a sulfide solid electrolyte according to a ninth aspect of the present embodiment, in the first to eighth aspects, the complexing agent is a compound having an amino group, and in the method for producing a sulfide solid electrolyte according to a tenth aspect of the present embodiment, in the first to ninth aspects, the complexing agent is a compound having at least two tertiary amino groups in the molecule.

In the production method of the present embodiment, the complexing agent is a solvent which has the property of forming a complex with the solid electrolyte raw material contained in the raw material-containing substance, as described above. As described later, a compound having a heteroatom is likely to have a property of forming a complex with a solid electrolyte raw material, and is a compound preferable as a complexing agent. Among these, in a case where the complexing agent is a compound having a nitrogen atom as a heteroatom and further a nitrogen atom as an amino group, not only a complex is more easily formed, but also a halogen atom which is difficult to be incorporated in the formation of the complex is easily incorporated, and thus the dispersed state of the solid electrolyte raw material is easily maintained uniformly. Therefore, higher ionic conductivity can be easily obtained.

Further, when a compound having an amino group is used as the complexing agent, in addition to the above properties, the compound has a property of being easily separated from the electrolyte precursor and easily removed. Therefore, the regeneration of the complex and the generation of impurities are suppressed, and it becomes easy to extremely efficiently obtain a sulfide solid electrolyte having high quality with few impurities and high ionic conductivity.

In the method for producing a sulfide solid electrolyte according to an eleventh aspect of the present embodiment, in the first to tenth aspects, media particles are not used in the heating in the heated air stream.

In the production method of the present embodiment, as described above, it is important to heat the electrolyte precursor in a heated air stream, and it is preferable not to use media particles. It is possible to suppress excessive contact with the heated air stream due to adhesion of the electrolyte precursor to the media particles, and it is possible to suppress deterioration of the amorphous sulfide solid electrolyte due to deterioration of the electrolyte precursor, so that high ionic conductivity is easily obtained.

In the production method of the present embodiment, heating in a heated air stream strictly means heating by a heated air stream, whereby the complexing agent can be efficiently removed from the electrolyte precursor, and a sulfide solid electrolyte having a high ionic conductivity can be efficiently produced.

In the method for producing a sulfide solid electrolyte according to a twelfth aspect of the present embodiment, in the first to eleventh aspects, the sulfide solid electrolyte has a thio-LISICON Region II type crystal structure.

In the production method of the present embodiment, it is possible to produce a desired sulfide solid electrolyte by changing the type and blending ratio of the solid electrolyte raw materials contained in the raw material-containing substance. A sulfide solid electrolyte having thio-LISICON Region II type crystal structure is known as a sulfide solid electrolyte with extremely high ionic conductivity, and is preferable as the sulfide solid electrolyte to be obtained by the production method of the present embodiment.

(Solid Electrolyte)

In the description herein, the "solid electrolyte" means an electrolyte that maintains a solid state at 25°C under a nitrogen atmosphere. The solid electrolyte in the present embodiment contains a lithium atom, a sulfur atom, a phosphorus atom, and a halogen atom, and has ionic conductivity attributed to the lithium atom.

The "solid electrolyte" includes both an amorphous solid electrolyte and a crystalline solid electrolyte.

In the description herein, the crystalline solid electrolyte is a solid electrolyte in which a peak derived from the solid electrolyte is observed in an X-ray diffraction pattern in X-ray diffractometry, and the presence or absence of a peak derived from a raw material of the solid electrolyte in these is not considered. That is, the crystalline solid electrolyte includes a crystal structure derived from the solid electrolyte, and a part thereof may be a crystal structure derived from the solid electrolyte, or the whole thereof may be a crystal structure derived from the solid electrolyte. As long as the crystalline solid electrolyte has the X-ray diffraction pattern as described above, a part of the crystalline solid electrolyte may include an amorphous solid electrolyte. Therefore, the crystalline solid electrolyte includes a so-called glass ceramic obtained by heating an amorphous solid electrolyte to a crystallization temperature or higher.

In addition, in the description herein, the amorphous solid electrolyte is a halo pattern in which a peak other than a peak derived from a material is not substantially observed in an X-ray diffraction pattern by an X-ray diffractometry, and the presence or absence of a peak derived from a raw material of the solid electrolyte does not matter.

[Method for Producing Sulfide Solid Electrolyte]

The method for producing a sulfide solid electrolyte of the present embodiment is a method for producing a sulfide solid electrolyte, including:

obtaining an electrolyte precursor-containing substance by mixing a raw material-containing substance containing a lithium atom, a phosphorus atom, a sulfur atom, and a halogen atom with a complexing agent; and then
heating the electrolyte precursor-containing substance in a heated air stream.

[Obtaining Electrolyte Precursor-Containing Substance]

The production method of the present embodiment includes obtaining an electrolyte precursor-containing substance by mixing a raw material-containing substance containing a lithium atom, a phosphorus atom, a sulfur atom, and a halogen atom with a complexing agent.

Regarding the production method of the present embodiment, the raw material-containing substance will be explained first.

(Raw Material-Containing Substance)

The raw material-containing substance used in the present embodiment contains a lithium atom, a sulfur atom, a phosphorus atom, and a halogen atom, and specifically a containing substance containing a compound (hereinafter, also referred to as a "solid electrolyte raw material") having one or more selected from the group consisting of these atoms. The raw material-containing substance used in the present embodiment preferably contains two or more kinds of solid electrolyte raw materials.

Examples of the solid electrolyte raw material contained in the raw material-containing substance includes, a raw material containing of at least two kinds of atoms selected from the above four kinds of atoms, such as lithium sulfides; lithium halides such as lithium fluoride, lithium chloride, lithium bromide, and lithium iodide ; phosphorus sulfides such as diphosphorus trisulfide ($P_2S_3$) and diphosphorus pentasulfide ($P_2S_5$); phosphorus halides such as various phosphorus fluorides ($PF_3$ and $PF_5$), various phosphorus chlorides ($PCl_3$, $PCl_5$, and $P_2Cl_4$), various phosphorus bromides ($PBr_3$ and $PBr_5$), and various phosphorus iodides ($PI_3$ and $P_2I_4$); and thiophosphoryl halides such as thiophosphoryl fluoride ($PSF_3$),

thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and halogen simple substances such as fluorine ($F_2$), chlorine ($Cl_2$), bromine ($Br_2$), and iodine ($I_2$), and preferably bromine ($Br_2$) and iodine ($I_2$).

Examples that can be used as solid electrolyte raw materials other than the above include a solid electrolyte raw material containing at least one atom selected from the above four kinds of atoms and containing an atom other than the four kinds of atoms, more specifically, lithium compounds such as lithium oxide, lithium hydroxide, and lithium carbonate; alkali metal sulfides such as sodium sulfide, potassium sulfide, rubidium sulfide, and cesium sulfide; metal sulfides such as silicon sulfide, germanium sulfide, boron sulfide, gallium sulfide, tin sulfide ($SnS$, $SnS_2$), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride ($POCl_3$) and phosphorus oxybromide ($POBr_3$).

Among the above, lithium sulfides, phosphorus sulfide such as diphosphorus trisulfide ($P_2S_3$) and diphosphorus pentasulfide ($P_2S_5$), halogen simple substances such as fluorine ($F_2$), chlorine ($Cl_2$), bromine ($Br_2$), and iodine ($I_2$), and lithium halides such as lithium fluoride, lithium chloride, lithium bromide, and lithium iodide are preferred. Furthermore, when introducing an oxygen atom into the solid electrolyte, phosphoric acid compounds such as lithium oxide, lithium hydroxide, and lithium phosphate are preferred. Preferred combinations of the solid electrolyte raw materials preferably include, for example, a combination of lithium sulfide, diphosphorus pentasulfide, and a lithium halide, and a combination of lithium sulfide, diphosphorus pentasulfide, and a halogen simple substance; and as the lithium halide, lithium bromide and lithium iodide are preferred, and as the halogen simple substance, bromine and iodine are preferred.

In the present embodiment, $Li_3PS_4$ containing a $PS_4$ structure can also be used as part of the raw material. Specifically, $Li_3PS_4$ is produced and prepared in advance, and is used as a raw material.

The content of $Li_3PS_4$ with respect to the total raw materials is preferably 60 to 100 mol%, more preferably 65 to 90 mol%, and still more preferably 70 to 80 mol%.

Further, when using $Li_3PS_4$ and a halogen simple substance, the content of the halogen simple substance with respect to $Li_3PS_4$ is preferably 1 to 50 mol%, more preferably 10 to 40 mol%, still more preferably 20 to 30 mol%, and yet still more preferably 22 to 28 mol%.

The lithium sulfide used in the present embodiment is preferably particles.

The average particle diameter ($D_{50}$) of the lithium sulfide particles is preferably 0.1 μm or more and 1000 μm or less, more preferably 0.5 μm or more and 100 μm or less, and still more preferably 1 μm or more and 20 μm or less. In the description herein, the average particle diameter ($D_{50}$) is a particle diameter which reaches 50% (volume-based) of the whole by sequentially integrating particles from the smallest particle diameter when a particle size distribution integration curve is drawn, and the volume distribution is an average particle diameter which can be measured using, for example, a laser diffraction/scattering type particle size distribution measuring device. In addition, among the raw materials exemplified above, it is preferable that the solid raw material has an average particle diameter similar to that of the lithium sulfide particles described above, that is, it is preferable that the average particle diameter of the solid raw material is within the same range as the average particle diameter of the lithium sulfide particles described above.

When using lithium sulfide, diphosphorus pentasulfide, and lithium halide as solid electrolyte raw materials, the ratio of lithium sulfide with respect to the total of lithium sulfide and diphosphorus pentasulfide is preferably 65 to 85 mol%, more preferably 70 to 82 mol%, and still more preferably 74 to 80 mol%, from the viewpoint of obtaining higher chemical stability and higher ionic conductivity.

When using lithium sulfide, diphosphorus pentasulfide, a lithium halide, and other solid electrolyte raw materials used as necessary, the content of lithium sulfide and diphosphorus pentasulfide with respect to the total of these is preferably 50 to 99 mol%, more preferably 55 to 85 mol%, and still more preferably 60 to 80 mol%.

Furthermore, when using lithium bromide and lithium iodide in combination as lithium halides, the ratio of lithium bromide with respect to the total of lithium bromide and lithium iodide is preferably 1 to 99 mol%, more preferably 20 to 80 mol%, still more preferably 35 to 80 mol%, and particularly preferably 45 to 70 mol%, from the viewpoint of improving ionic conductivity.

Furthermore, when using lithium bromide and lithium chloride in combination as lithium halides, the ratio of lithium bromide with respect to the total of lithium bromide and lithium chloride is preferably 1 to 99 mol%, more preferably 15 to 75 mol%, still more preferably 25 to 60 mol%, and particularly preferably 35 to 45 mol%, from the viewpoint of improving ionic conductivity.

In a case where a halogen simple substance is used as the solid electrolyte raw material, and lithium sulfide and diphosphorus pentasulfide are used, the ratio of the number of moles of lithium sulfide excluding lithium sulfide having the same number of moles as the number of moles of the halogen simple substance with respect to the total number of moles of diphosphorus pentasulfide and lithium sulfide excluding lithium sulfide having the same number of moles as the number of moles of the halogen simple substance is preferably in a range of 60% to 90%, more preferably in a range of 65% to 85%, still more preferably in a range of 68% to 82%, yet still more preferably in a range of 72% to 78%, and particularly preferably in a range of 73% to 77%. This is because higher ionic conductivity can be obtained with these ratios.

In addition, from the same viewpoint, in a case where lithium sulfide, diphosphorus pentasulfide, and a halogen simple substance are used, the content of the halogen simple substance with respect to the total amount of lithium sulfide, diphosphorus pentasulfide, and the halogen simple substance is preferably 1 to 50 mol%, more preferably 2 to 40 mol%, still more preferably 3 to 25 mol%, and yet still more preferably 3 to 15 mol%.

In a case where lithium sulfide, diphosphorus pentasulfide, a halogen simple substance, and a lithium halide are used, the content ($\alpha$ mol%) of the halogen simple substance and the content ($\beta$ mol%) of the lithium halide with respect to the total amount thereof preferably satisfy the following formula (2), more preferably satisfy the following formula (3), still more preferably satisfy the following formula (4), and yet still more preferably satisfy the following formula (5).

$$2 \leq 2\alpha + \beta \leq 100 \ ... \ (2)$$

$$4 \leq 2\alpha + \beta \leq 80 \ ... \ (3)$$

$$6 \leq 2\alpha + \beta \leq 50 \ ... \ (4)$$

$$6 \leq 2\alpha + \beta \leq 30 \ ... \ (5)$$

When two types of halogens are used as simple substances, and the number of moles of halogen atoms in one substance is A1 while the number of moles of halogen atoms in the other substance is A2, A1 : A2 is preferably 1 to 99 : 99 to 1, more preferably 10 : 90 to 90 : 10, still more preferably 20 : 80 to 80 : 20, and yet still more preferably 30 : 70 to 70 : 30.

When two types of halogen simple substances are used and the two types of halogen simple substances are bromine and iodine, and the number of moles of bromine is A1 while the number of moles of iodine is A2, A1 : A2 is preferably 1 to 99 : 99 to 1, more preferably 20 : 80 to 80 : 20, still more preferably 35 : 65 to 80 : 20, and yet still more preferably 45 : 55 to 70 : 30.

Further, when the two types of halogen simple substances are bromine and chlorine, and the number of moles of bromine is B1 while the number of moles of chlorine is B2, B1 : B2 is preferably 1 to 99 : 99 to 1, more preferably 15 : 85 to 75 : 25, still more preferably 25 : 75 to 60 : 40, and yet still more preferably 35 : 45 to 65 : 55.

(Complexing Agent)

As described above, the complexing agent is a compound that easily forms a complex with the solid electrolyte raw material contained in the raw material-containing substance, for example, it is a compound which can form a complex with lithium sulfide, diphosphorus pentasulfide, which are preferably used as solid electrolyte raw materials, $Li_3PS_4$ obtained when these are used, and a solid electrolyte raw material which further contains a halogen atom (hereinafter, also collectively referred to as "solid electrolyte raw materials and the like").

As the complexing agent, any compound having the above-described properties can be used without any particular limitations, and in particular, a compound containing an atom having a high affinity with a lithium atom, for example, a heteroatom such as a nitrogen atom, an oxygen atom, or a chlorine atom is preferred, and a compound having a group containing these heteroatoms is more preferred. This is because these heteroatoms and groups containing the heteroatoms can coordinate (bond) with lithium.

The heteroatom present in the molecule of the complexing agent has a high affinity with a lithium atom and it is considered to have properties of easily forming a complex (hereinafter, also simply referred to as "complex") by bonding to the solid electrolyte raw materials and the like. Therefore, it is considered that by mixing the solid electrolyte raw material and the complexing agent, a complex is formed, and the dispersion state of the solid electrolyte raw material, especially the dispersion state of halogen atoms, is easily maintained uniformly, and as a result, a sulfide solid electrolyte having high ionic conductivity can be obtained.

Regarding the ability of the complexing agent to form a complex with the solid electrolyte raw materials and the like, it can be directly confirmed by, for example, an infrared absorption spectrum measured by FT-IR analysis (diffuse reflection method).

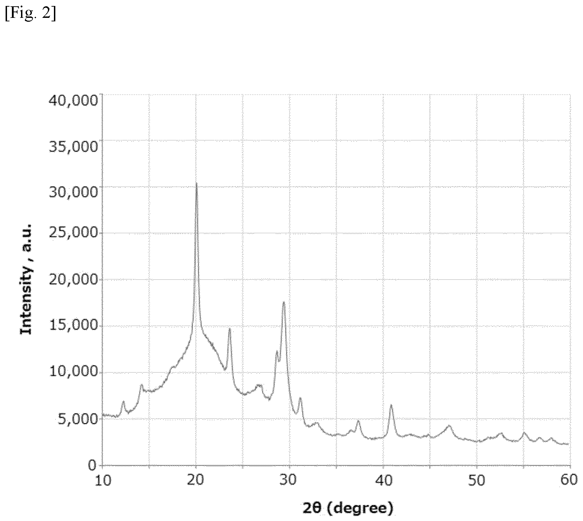

When a powder obtained by stirring tetramethylethylenediamine (hereinafter also simply referred to as "TMEDA"), which is one of the preferable complexing agents, and lithium iodide (LiI), as a complexing agent, and the complexing agent itself are analyzed by FT-IR analysis (diffuse reflection method), the spectrum is different from that of TMEDA itself, especially in the peak derived from the C-N stretching vibration at 1000 to 1250 cm$^{-1}$. Furthermore, even considering that it is known that a LiI-TMEDA complex is formed by stirring and mixing TMEDA and lithium iodide (for example, see Aust. J. Chem., 1988, 41, 1925-34, especially Fig. 2), it is reasonable to think that a LiI-TMEDA complex is formed.

Furthermore, for example, when a powder obtained by stirring a complexing agent (TMEDA) and $Li_3PS_4$ is analyzed by FT-IR analysis (diffuse reflection method) in the same manner as above, it can be confirmed that the spectrum differs from the spectrum of TMEDA itself in the peak derived from the C-N stretching vibration at 1000 to 1250 cm$^{-1}$, on the other hand it can also be confirmed that the spectrum is similar to that of the LiI-TMEDA complex. From this, it may be considered that a $Li_3PS_4$-TMEDA complex is formed.

In the production method of the present embodiment, these complexes obtained by mixing raw material-containing substances and a complexing agent are used as an electrolyte precursor, and the complexing agent is removed from the electrolyte precursor powder in a heated air stream to produce the sulfide solid electrolyte.

The complexing agent preferably has at least two heteroatoms which can be coordinated (bonded) in the molecule, and more preferably has a group containing at least two heteroatoms in the molecule. By having a group containing at least two heteroatoms in the molecule, solid electrolyte raw materials and the like can be bonded via at least two heteroatoms in the molecule. Further, among the heteroatoms, a nitrogen atom is preferred, and as the group containing a nitrogen atom, an amino group is preferred. That is, an amine compound is preferred as the complexing agent.

The amine compound is not particularly limited as long as it has an amino group in its molecule since it can promote the formation of a complex, however a compound having at least two amino groups in its molecule is preferred. By having such a structure, solid electrolyte raw materials and the like can be bonded via at least two nitrogen atoms in the molecule, to form the complex.

Examples of such an amine compound include amine compounds such as aliphatic amines, alicyclic amines, heterocyclic amines, and aromatic amines, and these amine compounds can be used alone or in combination of a plurality of kinds thereof.

More specifically, as the aliphatic amines, aliphatic primary diamines such as ethylenediamine, diaminopropane, and diaminobutane; aliphatic secondary diamines such as N,N'-dimethylethylenediamine, N,N'-diethylethylenediamine, N,N'-dimethyldiaminopropane, and N,N'-diethyldiaminopropane; aliphatic tertiary diamines such as N,N,N',N'-tetramethyldiaminomethane, N,N,N',N'-tetramethylethylenediamine, N,N,N',N'-tetraethylethylenediamine, N,N,N',N '-tetramethyldiaminopropane, N,N,N',N'-tetraethyldiaminopropane, N,N,N',N'-tetramethyldiaminobutane, N,N,N',N'-tetramethyldiaminopentane , and N,N,N',N'-tetramethyldiaminohexane; are representatively preferred. In the examples in the present description, for example, in the case of diaminobutane, unless otherwise specified, in addition to isomers regarding the position of the amino groups such as 1,2-diaminobutane, 1,3-diaminobutane, and 1,4-diaminobutane, all isomers, such as linear and branched isomers for butane, are included.

The number of carbon atoms of the aliphatic amine is preferably 2 or more, more preferably 4 or more, and still more preferably 6 or more, and the upper limit is preferably 10 or less, more preferably 8 or less, and still more preferably 7 or less. The number of carbon atoms in the aliphatic hydrocarbon group in the aliphatic amine is preferably 2 or more, and the upper limit is preferably 6 or less, more preferably 4 or less, and still more preferably 3 or less.

Typical preferred examples of the alicyclic amine include alicyclic diamines such as alicyclic primary diamines such as cyclopropanediamine and cyclohexanediamine; alicyclic secondary diamines such as bisaminomethylcyclohexane; and alicyclic tertiary diamines such as N,N,N',N'-tetramethyl-cyclohexanediamine and bis(ethylmethylamino)cyclohexane, and typical preferred examples of the heterocyclic amine include heterocyclic diamines such as heterocyclic primary diamines such as isophoronediamine; heterocyclic secondary diamines such as piperazine and dipiperidylpropane; and heterocyclic tertiary diamines such as N,N-dimethylpiperazine and bismethylpiperidylpropane.

The number of carbon atoms of the alicyclic amine and heterocyclic amine is preferably 3 or more, and more preferably 4 or more, and the upper limit is preferably 16 or less, and more preferably 14 or less.

In addition, typical preferred examples of the aromatic amine include aromatic diamines such as aromatic primary diamines such as phenyl diamine, tolylene diamine, and naphthalene diamine; aromatic secondary diamines such as N-methylphenylenediamine, N,N'-dimethylphenylenediamine, N,N'-bismethylphenylphenylenediamine, N,N'-dimethylnaphthalenediamine, and N-naphthylethylenediamine; and aromatic tertiary diamines such as N,N-dimethylphenylenediamine, N,N,N',N'-tetramethylphenylenediamine, N,N,N',N'-tetramethyldiaminodiphenylmethane, and N,N,N',N'-tetramethyl naphthalenediamine.

The number of carbon atoms of the aromatic amine is preferably 6 or more, more preferably 7 or more, and still more preferably 8 or more, and the upper limit is preferably 16 or less, more preferably 14 or less, and still more preferably 12 or less.

The amine compound used in the present embodiment may be substituted with a substituent such as an alkyl group, an alkenyl group, an alkoxyl group, a hydroxy group, or a cyano group, or a halogen atom.

Although diamine was illustrated as a specific example, it goes without saying that the amine compound that can be used in the present embodiment is not limited to diamine, for example, aliphatic monoamines corresponding to various diamines such as trimethylamine, triethylamine, ethyldimethylamine, and the above aliphatic diamines, also, piperidine compounds such as piperidine, methylpiperidine, and tetramethylpiperidine, pyridine compounds such as pyridine and picoline, morpholine compounds such as morpholine, methylmorpholine, and thiomorpholine, imidazole compounds such as imidazole and methylimidazole, monoamines such as alicyclic monoamines such as monoamines corresponding to the alicyclic diamines, heterocyclic monoamines corresponding to the heterocyclic diamines, and aromatic monoamines corresponding to the aromatic diamines, in addition, for example, polyamines having three or more amino groups such as diethylenetriamine, N,N',N"-trimethyldiethylenetriamine, N,N,N',N",N"-pentamethyldiethylenetriamine, triethylenetetramine, N,N'-bis[(dimethylamino)ethyl] -N,N'-dimethylethylenediamine, hexamethylenetetramine, and tetraethylenepentamine, can also be used.

Among the above, from the viewpoint of obtaining higher ionic conductivity, tertiary amines having a tertiary amino group as the amino group are preferred, a tertiary diamine having two tertiary amino groups are more preferred, a tertiary diamine having two tertiary amino groups at both ends are still more preferred, and an aliphatic tertiary diamine having tertiary amino groups at both ends are yet still more preferred. In the above amine compound, as the aliphatic tertiary diamine having tertiary amino groups at both ends, tetramethylethylenediamine, tetraethylethylenediamine, tetramethyldiaminopropane, and tetraethyldiaminopropane are preferred, and considering ease of availability, tetramethylethylenediamine and tetramethyldiaminopropane are preferred.

In addition, a compound having a group other than an amino group, for example, a group such as a nitro group or an amide group, which contains a nitrogen atom as a heteroatom, can also obtain the same effect.

In the production method of the present embodiment, as the complexing agent, in addition to the compound containing a nitrogen atom described above as a heteroatom, a compound containing an oxygen atom is also preferred.

As the compound containing an oxygen atom, a compound having one or more functional groups selected from an ether group and an ester group as a group containing an oxygen atom is preferred, and among these, a compound having an ether group is particularly preferred. That is, as the complexing agent containing an oxygen atom, an ether compound is particularly preferred.

Examples of the ether compound include ether compounds such as aliphatic ethers, alicyclic ethers, heterocyclic ethers, and aromatic ethers, and these ether compounds can be used alone or in combination of a plurality of kinds thereof.

More specifically, examples of the aliphatic ether include monoethers such as dimethyl ether, diethyl ether, diisopropyl ether, dibutyl ether, and tert-butyl methyl ether; diethers such as dimethoxymethane, dimethoxyethane, diethoxymethane, and diethoxyethane; polyethers having three or more ether groups such as diethylene glycol dimethyl ether (diglyme) and triethylene oxide glycol dimethyl ether (triglyme); and ethers containing a hydroxy group such as diethylene glycol and triethylene glycol.

The number of carbon atoms of the aliphatic ether is preferably 2 or more, more preferably 3 or more, and still more preferably 4 or more, and the upper limit is preferably 10 or less, more preferably 8 or less, and still more preferably 6 or less.

The number of carbon atoms of the aliphatic hydrocarbon group in the aliphatic ether is preferably 1 or more, and the upper limit is preferably 6 or less, more preferably 4 or less, and still more preferably 3 or less.

Examples of the alicyclic ether include ethylene oxide, propylene oxide, tetrahydrofuran, tetrahydropyran, dimethoxytetrahydrofuran, cyclopentyl methyl ether, dioxane, and dioxolane, and examples of the heterocyclic ether include furan, benzofuran, benzopyran, dioxene, dioxin, morpholine, methoxyindole, and hydroxymethyldimethoxypyridine.

The number of carbon atoms of the alicyclic ether and heterocyclic ether is preferably 3 or more, and more preferably 4 or more, and the upper limit is preferably 16 or less, and more preferably 14 or less.

Examples of the aromatic ether include methyl phenyl ether (anisole), ethyl phenyl ether, dibenzyl ether, diphenyl ether, benzylphenyl ether, and naphthyl ether.

The number of carbon atoms of the aromatic ether is preferably 7 or more, and more preferably 8 or more, and the upper limit is preferably 16 or less, more preferably 14 or less, and still more preferably 12 or less.

The ether compound used in the present embodiment may be substituted with a substituent such as an alkyl group, an alkenyl group, an alkoxyl group, a hydroxy group, or a cyano group, or a halogen atom.

Among the above ether compounds, aliphatic ethers are preferred, and dimethoxyethane and tetrahydrofuran are more preferred, from the viewpoint of obtaining higher ionic conductivity.

Examples of the ester compound include ester compounds such as aliphatic esters, alicyclic esters, heterocyclic esters, and aromatic esters, and these ester compounds can be used alone or in combination of a plurality of kinds thereof.

More specifically, examples of the aliphatic ester include formic acid esters such as methyl formate, ethyl formate, and triethyl formate; acetic acid esters such as methyl acetate, ethyl acetate, propyl acetate, isopropyl acetate, butyl acetate, and isobutyl acetate; propionic acid esters such as methyl propionate, ethyl propionate, propyl propionate, and butyl propionate; oxalic acid esters such as dimethyl oxalate and diethyl oxalate; malonic acid esters such as dimethyl malonate and diethyl malonate; and succinic acid esters such as dimethyl succinate and diethyl succinate.

The number of carbon atoms of the aliphatic ester is preferably 2 or more, more preferably 3 or more, and still more preferably 4 or more, and the upper limit is preferably 10 or less, more preferably 8 or less, and still more preferably 7 or less. The number of carbon atoms of the aliphatic hydrocarbon group in the aliphatic ester is preferably 1 or more, and more preferably 2 or more, and the upper limit is preferably 6 or less, more preferably 4 or less, and still more preferably 3 or less.

Examples of the alicyclic ester include methyl cyclohexanecarboxylate, ethyl cyclohexanecarboxylate, dimethyl cyclohexanedicarboxylate, dibutyl cyclohexanedicarboxylate, and dibutyl cyclohexenedicarboxylate, and examples of the heterocyclic ester include methyl pyridinecarboxylate, ethyl pyridinecarboxylate, propyl pyridinecarboxylate, methyl pyrimidinecarboxylate, ethyl pyrimidinecarboxylate, and lactones such as acetolactone, propiolactone, butyrolactone, and valerolactone.

The number of carbon atoms of the alicyclic ester and heterocyclic ester is preferably 3 or more, and more preferably 4 or more, and the upper limit is preferably 16 or less, and more preferably 14 or less.

Examples of the aromatic ester include benzoic acid esters such as methyl benzoate, ethyl benzoate, propyl benzoate, and butyl benzoate; phthalic acid esters such as dimethyl phthalate, diethyl phthalate, dibutyl phthalate, butylbenzyl phthalate, and dicyclohexyl phthalate; and trimellitic acid esters such as trimethyl trimellitate, triethyl trimellitate, tripropyl trimellitate, tributyl trimellitate, and trioctyl trimellitate.

The number of carbon atoms of the aromatic ester is preferably 8 or more, and more preferably 9 or more, and the upper limit is preferably 16 or less, more preferably 14 or less, and still more preferably 12 or less.

The ester compound used in the present embodiment may be substituted with a substituent such as an alkyl group, an alkenyl group, an alkoxyl group, a hydroxy group, or a cyano group, or a halogen atom.

Among the above ester compounds, from the viewpoint of obtaining higher ionic conductivity, an aliphatic ester is preferred, an acetic acid ester is more preferred, and ethyl acetate is particularly preferred.

From the viewpoint of efficiently forming a complex, the amount of the complexing agent added is such that the molar ratio of the amount of the complexing agent added with respect to the total molar amount of lithium atoms contained in the raw material-containing substance is preferably 0.1 or more and 2.0 or less, more preferably 0.5 or more and 1.5 or less, still more preferably 0.8 or more and 1.2 or less, and most preferably 1.0.

(Mixing)

In the production method of the present embodiment, the solid electrolyte raw material and the complexing agent are mixed.

In the present embodiment, the form in which the solid electrolyte raw material and the complexing agent are mixed may be any of a solid form and a liquid form, but since the solid electrolyte raw material contains a solid and the complexing agent is in a liquid form, the solid electrolyte raw material and the complexing agent are usually mixed in a form in which the solid solid electrolyte raw material is present in the liquid complexing agent. In addition, when the raw material and the complexing agent are mixed, a solvent may be further mixed as necessary. Hereinafter, in a place where mixing of the raw material and the complexing agent is described, the complexing agent also includes a solvent used as necessary, unless otherwise specified.

There is no particular limitation on the method of mixing the solid electrolyte raw material and the complexing agent, and the solid electrolyte raw material and the complexing agent may be mixed by being introduced into an apparatus capable of mixing the solid electrolyte raw material and the complexing agent. For example, when the solid electrolyte raw material is gradually added after supplying the complexing agent into a tank and activating the stirring blades, a good mixing state of the solid electrolyte raw materials can be obtained and the dispersibility of the raw materials is improved, therefore it is preferred.

However, when using a halogen simple substance as a solid electrolyte raw material, the solid electrolyte raw material may not be solid, specifically, at room temperature and normal pressure, fluorine and chlorine are gases, and bromine is liquid. In such cases, for example, when the solid electrolyte raw material is a liquid, it may be supplied with the complexing agent into the tank separately from other solid electrolyte raw materials, and when the solid electrolyte raw material is a gas, it may be supplied by blowing into the complexing agent to which the solid electrolyte, which is a solid, is added.

The production method of the present embodiment is characterized by including mixing a solid electrolyte raw material with a complexing agent. In other words, since it is sufficient to mix the solid electrolyte raw material and the complexing agent and does not require pulverization, it can also be produced by a method which does not use equipment which is generally called as a grinder such as media type grinders including ball mill and bead mill, and used for the purpose of pulverizing solid electrolyte raw materials. In the production method of the present embodiment, by simply mixing the solid electrolyte raw material and the complexing agent, the solid electrolyte raw material contained in the raw material-containing substance and the complexing agent are mixed, and a complex, that is, an electrolyte precursor may be formed. In addition, in order to shorten the mixing time to obtain the complex or to make it finely powdered, the mixture of the raw material and the complexing agent may be pulverized with a grinder, however, as described above, it is preferable that a grinder is not used.

On the other hand, the electrolyte precursor may be pulverized by a grinder.

Examples of the apparatuses for mixing the solid electrolyte raw material and the complexing agent include a mechanical stirring type mixer equipped with stirring blades in a tank. Examples of the mechanical stirring type mixer include a high-speed stirring mixer and a double-arm mixer, and the high-speed stirring mixer is preferably used from the viewpoint of increasing the uniformity of the solid electrolyte raw material in the mixture of the solid electrolyte raw material and the complexing agent and obtaining higher ionic conductivity. Further, examples of the high-speed stirring type mixer include a vertical axis rotation type mixer and a horizontal axis rotation type mixer, and either type of mixer may be used.

Examples of the shape of the stirring blade used in the mechanical stirring type mixer include an anchor type, a blade type, an arm type, a ribbon type, a multi-stage blade type, a double-arm type, a shovel type, a twin-screw blade type, a flat blade type, and a C-blade type. From the viewpoint of improving the uniformity of the solid electrolyte raw material and obtaining higher ionic conductivity, a shovel type, a flat blade type, and a C-blade type are preferred. Further, in the mechanical stirring type mixer, it is preferable to install a circulation line for discharging the object to be stirred outside the mixer and returning it to the inside of the mixer. By doing so, raw materials with heavy specific gravity such as a lithium halide are stirred without settling or stagnation, and it becomes possible to mix more uniformly.

The location of the circulation line to be installed is not particularly limited, however it is preferably installed at a location such that the object to be stirred is discharged from the bottom of the mixer and returned to the top of the mixer. This makes it easier to uniformly stir the solid electrolyte raw material, which easily settles, on the convection caused by circulation. Furthermore, it is preferable that the return port is located below the surface of the liquid of the object to be stirred. By doing so, it is possible to suppress the object to be stirred from liquid splashing and adhering to the wall surface inside the mixer.

The temperature conditions for mixing the solid electrolyte raw material and the complexing agent are not particularly limited, and are, for example, -30 to 100°C, preferably -10 to 50°C, more preferably around room temperature (23°C) (for example, approximately room temperature $\pm 5$°C). The mixing time is about 0.1 to 150 hours, and preferably 1 to 120 hours, more preferably 4 to 100 hours, and still more preferably 8 to 80 hours, from the viewpoint of mixing more uniformly and obtaining higher ionic conductivity.

By mixing the solid electrolyte raw material and the complexing agent, a complex is formed by the solid electrolyte raw materials and the like, and the complexing agent. More specifically, the complex is considered to be formed by bonding to each other with a complexing agent and/or directly without a complexing agent, by an interaction of a lithium atom, a sulfur atom, a phosphorus atom, and a halogen atom contained in the solid electrolyte raw material and the complexing agent. That is, in the production method of the present embodiment, the complex obtained by mixing the solid electrolyte raw material and the complexing agent can be said to be composed of the complexing agent, a lithium atom, a sulfur atom, a phosphorus atom, and a halogen atom.

The complex obtained in the present embodiment does not completely dissolve in the complexing agent which is a liquid and is usually solid, therefore a suspension in which the complex is suspended, in the complexing agent and the solvent which is used if necessary, can be obtained. Therefore, the method for producing a solid electrolyte of the present embodiment corresponds to a heterogeneous system in a so-called liquid phase method.

(Solvent)

In the present embodiment, a solvent may be further added when mixing the solid electrolyte raw material and the complexing agent.

When a complex which is a solid is formed in a liquid complexing agent, separation of components may occur when the complex is easily soluble in the complexing agent. Therefore, by using a solvent in which the complex does not dissolve, elution of components in the electrolyte precursor can be suppressed. In addition, by mixing the solid electrolyte raw material and the complexing agent using a solvent, complex formation is promoted and each main component can be more evenly present, and an electrolyte precursor in which the dispersion state of the solid electrolyte raw material, especially the dispersion state of halogen atoms is maintained uniformly, is obtained, therefore, as a result, the effect of obtaining high ionic conductivity is easily exhibited.

The method for producing a solid electrolyte of the present embodiment is a so-called heterogeneous method, and it is preferable that the complex does not completely dissolve in the liquid complexing agent and is precipitated. The solubility of the complex can be adjusted by adding a solvent. In particular, since a halogen atom is easily eluted from the complex, the elution of the halogen atom is suppressed by adding a solvent to obtain a desired complex. As a result, a sulfide solid electrolyte having high ionic conductivity can be easily obtained through an electrolyte precursor in which components such as solid electrolyte raw materials, particularly solid electrolyte raw materials and the like containing a halogen atom, are uniformly dispersed.

As the solvent having such properties, a solvent having a solubility parameter of 10 or less is preferred. In the description herein, the solubility parameter is a value $\delta$ described in various documents, such as "Chemistry Handbook" (published in 2004, revised 5th edition, Maruzen Publishing Co., Ltd.), and calculated by the following formula (1) ($(cal/cm^3)^{1/2}$), which is also called Hildebrand parameter or SP value.

$$\delta = \sqrt{(\Delta H - RT)/V} \qquad (1)$$

(In formula (1), $\Delta H$ is a molar heat generation, R is a gas constant, T is a temperature, and V is a molar volume.)

By using the solvent having a solubility parameter of 10 or less, it is possible to achieve a state in which the solid electrolyte raw material, particularly a halogen atom, a raw material containing a halogen atom such as a lithium halide, and a component containing a halogen atom constituting the complex (for example, an aggregate in which a lithium halide and a complexing agent are bonded to each other) are relatively less likely to be dissolved as compared with the complexing agent. Therefore, it becomes easy to fix the halogen atom particularly in the complex, and the halogen atom is present in the obtained electrolyte precursor and further in the solid electrolyte in a good dispersion state, and it becomes easy to obtain a solid electrolyte having high ionic conductivity. That is, it is preferable that the solvent used in the present embodiment has a property in which the complex does not dissolve. From the same viewpoint, the solubility parameter of the solvent is preferably 9.5 or less, more preferably 9.0 or less, and still more preferably 8.5 or less.

More specifically, as the solvent used in the present embodiment, it is possible to widely adopt solvents that have been conventionally used in the production of the solid electrolyte, and examples thereof include hydrocarbon solvents such as aliphatic hydrocarbon solvents, alicyclic hydrocarbon solvents, and aromatic hydrocarbon solvents; solvents containing a carbon atom such as alcohol-based solvents, ester-based solvents, aldehyde-based solvents, ketone-based solvents, ether-based solvents having 4 or more carbon atoms on one side, and solvents containing a carbon atom and a heteroatom, and among these solvents, solvents may be appropriately selected and used from solvents having preferably a solubility parameter in the above range.

More specifically, examples thereof include aliphatic hydrocarbon solvents such as hexane (7.3), pentane (7.0), 2-ethylhexane, heptane (7.4), octane (7.5), decane, undecane, dodecane, and tridecane; alicyclic hydrocarbon solvents such as cyclohexane (8.2) and methylcyclohexane; aromatic hydrocarbon solvents such as benzene, toluene (8.8), xylene (8.8), mesitylene, ethylbenzene (8.8), tert-butylbenzene, trifluoromethylbenzene, nitrobenzene, chlorobenzene (9.5), chlorotoluene (8.8), and bromobenzene; alcohol-based solvents such as ethanol (12.7) and butanol (11.4); aldehyde-based solvents such as formaldehyde, acetaldehyde (10.3), and dimethylformamide (12.1); ketone-based solvents such as acetone (9.9) and methyl ethyl ketone; ether-based solvents such as dibutyl ether, cyclopentyl methyl ether (8.4), tert-butyl methyl ether, and anisole; solvents containing a carbon atom and a heteroatom such as acetonitrile (11.9), dimethyl sulfoxide, and carbon disulfide. Note that the numerical value in parentheses in the above examples is the SP value.

In addition, the above examples are merely examples, and for example, those having isomers may include all isomers. In addition, in the case of a solvent substituted with a halogen atom, an alicyclic hydrocarbon solvent, or an aromatic hydrocarbon solvent, for example, a solvent substituted with an aliphatic group such as an alkyl group may be included.

Among these solvents, aliphatic hydrocarbon solvents, alicyclic hydrocarbon solvents, aromatic hydrocarbon solvents, and ether-based solvents are preferred, and from the viewpoint of more stably obtaining high ionic conductivity, heptane, cyclohexane, toluene, ethylbenzene, diethyl ether, diisopropyl ether, dibutyl ether, dimethoxyethane, cyclopentyl methyl ether, tert-butyl methyl ether, and anisole are more preferred, diethyl ether, diisopropyl ether, and dibutyl ether are still more preferred, and diisopropyl ether and dibutyl ether are yet still more preferred, and cyclohexane is particularly preferred. The solvent used in the present embodiment is preferably the organic solvent exemplified above, and is an organic solvent different from the complexing agent described above. In the present embodiment, these solvents may be used alone or in combination of a plurality of kinds thereof.

[Drying]

The production method of the present embodiment may contain drying the electrolyte precursor-containing substance after obtaining the electrolyte precursor-containing substance.

In removing the complexing agent, by heating the electrolyte precursor obtained by drying the electrolyte precursor-containing substance in a heated air stream, the electrolyte precursor can be heated more directly, therefore it becomes possible to separate and remove the complexing agent more efficiently.

Examples of the drying method include filtration using a glass filter, solid-liquid separation by decantation, and solid-liquid separation using a centrifuge. For the solid-liquid separation, specifically, decantation to remove the supernatant complexing agent and the solvent which is optionally used after the suspension is transferred to a container and the solid is precipitated, furthermore, filtration using a glass filter, for example, with a pore size of about 10 to 200 $\mu$m, preferably 20 to 150 $\mu$m, are easy.

Moreover, it can also be dried by heating using a dryer. Drying of the electrolyte precursor-containing substance may be performed under any pressure condition, such as increased pressure, normal pressure, or reduced pressure, and is preferably performed under normal pressure or reduced pressure. In particular, considering drying at a lower temperature, it is preferable to dry using a vacuum pump, under reduced pressure or even under vacuum.

As the temperature conditions for drying, the drying may be performed at a temperature equal to or higher than the boiling point of the remaining complexing agent or the solvent used as necessary. Specific temperature conditions cannot be determined completely since they may change depending on the type of complexing agent and solvent used, however preferably at 5°C or higher, more preferably at 10°C or higher, and still more preferably at 15°C or higher, and the upper limit is preferably 110°C or lower, more preferably 85°C or lower, and still more preferably 70°C or lower.

In addition, as for the pressure conditions, as descirbed above, it is preferable to be under normal pressure or reduced pressure, and in the case of reduced pressure, specifically, preferably 85 kPa or less, more preferably 80 kPa or less, and still more preferably 70 kPa or less. The lower limit may be a vacuum (0 KPa), and considering ease of pressure adjustment, it is preferably 1 kPa or more, more preferably 2 kPa or more, and still more preferably 3 kPa or more.

In the production method of the present embodiment, when drying is performed, drying may be performed while heating after performing the solid-liquid separation.

Further, in the production method of the present embodiment, drying may or may not be performed. That is, in the production method of the present embodiment, the heating target of the heating in a heated air stream may be an electrolyte precursor-containing substance, or may be an electrolyte precursor obtained by drying. As described above, since the electrolyte precursor can be heated more directly, the electrolyte precursor is preferable as the heating target.

[Heating in Heated Air Stream]

The production method of the present embodiment includes:

> obtaining the electrolyte precursor-containing substance and then
> heating it in a heated air stream.

A sulfide solid electrolyte is obtained by removing the complexing agent from the electrolyte precursor by heating the electrolyte precursor-containing substance obtained in obtaining the electrolyte precursor-containing substance and further the electrolyte precursor in a case where the drying is performed (hereinafter, the electrolyte precursor-containing substance and the electrolyte precursor may be collectively referred to as a "heating object") in a heated air stream, that is, by removing the complexing agent from a complex formed by the solid electrolyte raw materials and the like and the complexing agent.

More specifically, the heating in the heated air stream can be performed by supplying the heating object into an air stream in which a heated gas flows, and for example, a commercially available apparatus as a pneumatic conveying dryer can be used. The pneumatic conveying dryer is an apparatus capable of heating a heating object by a heated air stream by supplying the heating object into a pipe to which the heated air stream is supplied, and a direct hot air type pneumatic conveying dryer in which the heated air stream and the heating object are in direct contact with each other is preferable.

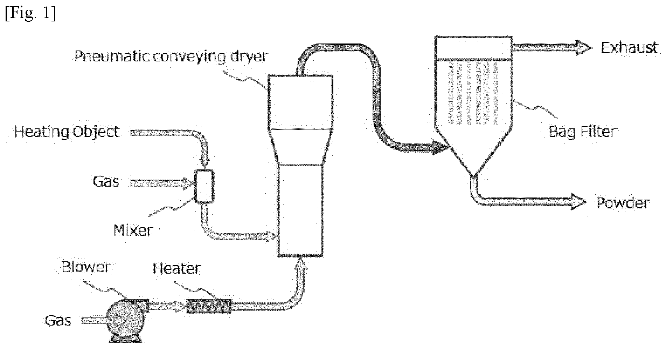

As the pneumatic conveying dryer, for example, as shown in Fig. 1, a pneumatic conveying dryer including a heating portion having a cylindrical container shape (also referred to as a "cylindrical container type pneumatic conveying dryer") is preferably used. When the heating portion is a cylindrical container, the cross-sectional areas of the heating object and the flow path of the heated air stream are widened. Therefore, even in a case where the heating object adheres to and solidifies on the inner wall surface and the cross-sectional area of the flow path is reduced due to the adhesion and solidification, it is possible to suppress the influence on the fluctuation due to the turbulence and the blockage of the flow. As a result, stable drying is easily performed. In addition, it is suitable for mass treatment as compared with other types to be described later, it becomes easy to continue long-term operation, and it is easy to perform visual inspection and open cleaning, so that it is also excellent in maintainability.

As the pneumatic conveying dryer, it is preferable to use a pneumatic conveying dryer having a structure capable of heating a heating object while swirling a heated air stream, for example, a pneumatic conveying dryer in which a dispersion plate is provided so that the heated air stream swirls in the pipe, and a pneumatic conveying dryer in which at least a part of the pipe has an annular shape or a semicircular shape (also referred to as a "circular annular pneumatic conveying dryer" and a "semicircular pneumatic conveying dryer", respectively). In a case where a pneumatic conveying dryer having such a structure is adopted, it is possible to suppress the adhesion of the electrolyte precursor to the inner wall, and it is possible to perform classification by centrifugal force by using the mass difference between the electrolyte precursor from which the complexing agent has been removed and the electrolyte precursor in which the complexing agent remains, and thus it is possible to more efficiently remove the complexing agent. In addition, it is possible to further reduce the size of the pneumatic conveying dryer, and it is possible to save space.

In addition, as the pneumatic conveying dryer, for example, a pneumatic conveying dryer of a type in which a vertically long pipe that holds a length necessary for heating is used, and a heated air stream is introduced from below the vertically long pipe and is heated while being co-flowed with the heating object (also referred to as a "vertically long pipe type pneumatic conveying dryer") is preferably used. When a vertically long pipe type pneumatic conveying dryer is used, since the flow direction of the heating object and the heated air stream can be limited upward, it is possible to cope with changes in the flow rate, particle diameter, and density of the heating object, and stable drying becomes easy. In addition, since the structure is simple, even if the heating object adheres to the inner wall, the peeling operation can be easily performed, and thus it is easy to cope with long-term operation. Further, since it is a type that can cope with an increase in the processing amount and the drying capacity by extending the dimension in the vertical direction, the installation area can be suppressed to be smaller than that of other types, and there is an advantage in terms of equipment installation.

In the vertically long pipe type pneumatic conveying dryer, the pipe diameters of the vertically long pipe portions may be the same, or may not be the same in order to adjust the state of heating to the heating object, and may have a partially wide or narrow portion.

The above-described pneumatic conveying dryer is preferably used mainly in a flow system. However, it is also possible to perform batch-type air stream drying using, for example, a container-type pneumatic conveying dryer. For example, a heated air stream may be introduced from the lower portion of the container to heat the heating object. In this case, when a nozzle-shaped throttle portion is provided in the introduction portion of the heated air stream, the heating object can be heated while being mixed and stirred by introducing the heated air stream by increasing the flow velocity, so that the drying efficiency can be improved. In the case of batch-type air stream drying, there is no limitation on the type of the pneumatic conveying dryer, and any pneumatic conveying dryer can be used. For example, the above-described cylindrical container type pneumatic conveying dryer may be used.

In the case of a batch type, it is possible to arbitrarily set the heating object, the introduction amount and temperature of the heated air stream, and the heating time per batch. Therefore, it is possible to arbitrarily set the operating conditions according to the state of the heating object, and the degree of removal of the complexing agent from the heating object (electrolyte precursor). In addition, by monitoring the change in the concentration of the complexing agent contained in the heated air stream discharged from the pneumatic conveying dryer, it is possible to easily perform operation adjustment such as determining whether the drying can be completed, and thus excellent operation controllability is achieved.

In the heating in the heated air stream, it is preferable that media particles are not used. By not using media particles such as ceramic balls and zirconia beads, it is possible to suppress excessive contact with the heated air stream due to adhesion of the electrolyte precursor to the media particles, and it is possible to suppress deterioration of the amorphous sulfide solid electrolyte due to deterioration of the electrolyte precursor. Therefore, the ionic conductivity is improved.

(Heated Air Stream)

The gas used for the heated air stream may be adopted without particular limitation as long as it is a gas. For example, various gases such as an inert gas such as nitrogen and argon, and air can be adopted. In consideration of the cost, it is preferable to use nitrogen and air, and in consideration of improving the ionic conductivity, it is preferable to use nitrogen. These gases may be used singly or in a mixture of a plurality of kinds thereof.

In addition, the dew point temperature of the gas is preferably -10°C or lower, more preferably -20°C or lower, and still more preferably -30°C or lower from the viewpoint of suppressing a deterioration in the quality of the sulfide solid electrolyte caused by moisture contained in the gas.

The temperature of the heated air stream is not particularly limited as long as the heating can be performed to such an extent that the complexing agent can be removed from the electrolyte precursor. Since the temperature can vary depending on the type of the complexing agent, the temperature of the heated air stream is not necessarily determined. However, the temperature of the heated air stream is preferably 100°C or higher, more preferably 105°C or higher, and still more preferably 110°C or higher, and the upper limit thereof is preferably 180°C or lower, more preferably 170°C or lower, still more preferably 160°C or lower, and yet still more preferably 155°C or lower. Here, the temperature of the heated air stream is a supply temperature of the heated air stream, and is, for example, a supply temperature to the pneumatic conveying dryer in a case where the above-described pneumatic conveying dryer is used. Within the above range, the complexing agent can be more efficiently removed.

Since the temperature of the heated air stream decreases when the electrolyte precursor is heated, for example, in a case where the above-described pneumatic conveying dryer is used, the outlet temperature from the pneumatic conveying dryer is lower than the supply temperature (temperature of the heated air stream) to the pneumatic conveying dryer. The outlet temperature is not necessarily determined because it varies depending on the scale of the pneumatic conveying dryer or the like with respect to the supply temperature, but it is usually lower by 3°C or more, further can be lower by 5°C or more, and can be lower by 10°C or more.

In addition, the temperature of the electrolyte precursor is lower than the temperature of the heated air stream because the time for heating in the heated air stream is short and the temperature of the electrolyte precursor does not usually reach the temperature of the heated air stream. The temperature of the electrolyte precursor by heating in the heated air stream is preferably 80°C or higher, more preferably 90°C or higher, and still more preferably 100°C or higher as the temperature after heating in the heated air stream (that is, the temperature is also the temperature of the sulfide solid electrolyte obtained by removing the complexing agent from the electrolyte precursor), and the upper limit thereof is preferably 130°C or lower, more preferably 125°C or lower, and still more preferably 120°C or lower.

The supply amount of the heated air stream is not particularly limited as long as the complexing agent can be removed from the electrolyte precursor. The supply amount of the heated air stream is not necessarily determined because it varies depending on the type of the complexing agent, the scale of the pneumatic conveying dryer to be used, or the like, but is preferably 0.1 m$^3$/min or more, more preferably 0.3 m$^3$/min or more, and still more preferably 0.5 m$^3$/min or more, and the upper limit thereof is preferably 500 m$^3$/min or less, more preferably 475 m$^3$/min or less, and still more preferably 450 m$^3$/min or less. Within the above range, the complexing agent can be more efficiently removed.

The supply amount of the heated air stream is not particularly limited as long as the complexing agent can be removed from the electrolyte precursor, and the supply amount is not necessarily determined because it varies depending on the type of the complexing agent, the scale of the pneumatic conveying dryer to be used, or the like, but is preferably 1.0 g/m$^3$ or more, more preferably 1.5 g/m$^3$ or more, and still more preferably 2.0 g/m$^3$ or more, and the upper limit thereof is preferably 50.0 g/m$^3$ or less, as the supply amount of the electrolyte precursor (g/min)/the supply amount of the heated air stream (m$^3$/min).

The flow velocity of the heated air stream is not particularly limited as long as the complexing agent can be removed from the electrolyte precursor, and the flow velocity is not necessarily determined because it varies depending on the type of the complexing agent, the scale of the pneumatic conveying dryer to be used, or the like, but is preferably 5 m/s or more, more preferably 7.5 m/s or more, and still more preferably 9 m/s or more, and the upper limit thereof is preferably 35 m/s or less, more preferably 30 m/s or less, and still more preferably 25 m/s or less. Within the above range, the complexing agent can be more efficiently removed.

The heating time in the heating in the heated air stream is not particularly limited as long as the complexing agent can be removed from the electrolyte precursor, and the heating time is not necessarily determined because it varies depending on the type of the complexing agent, the scale of the pneumatic conveying dryer to be used, or the like, but the upper limit is preferably 1 minute or less, more preferably 50 seconds or less, still more preferably 40 seconds or less, yet still more preferably 15 seconds or less, and particularly preferably 5 seconds or less. On the other hand, the lower limit is usually 0.05 seconds or more, preferably 0.1 seconds or more, and more preferably 0.2 seconds or more.

As described above, the heating time in the heated air stream is extremely short. Therefore, for example, the electrolyte precursor is not exposed to a high-temperature condition for a long time, deterioration due to heat can be suppressed, and a sulfide solid electrolyte having high ionic conductivity can be obtained.

(Content of Complexing Agent)

By heating in the above-described heated air stream, the complexing agent can be removed from the electrolyte precursor, and the electrolyte precursor becomes an amorphous sulfide solid electrolyte. However, not all of the complexing agent is removed from the electrolyte precursor, and as a result, the complexing agent may remain in the amorphous sulfide solid electrolyte. In this case, the content of the complexing agent contained in the sulfide solid electrolyte is preferably 0% by mass, that is, the complexing agent is preferably not contained at all, but from the viewpoint of efficiently obtaining a sulfide solid electrolyte having high ionic conductivity, the content is usually 50% by mass or less, further 45% by mass or less, 35% by mass or less, 25% by mass or less, 15% by mass or less, 10% by mass or less, and 5% by mass or less, and the lower limit is about 0.1% by mass or more.

In addition, similar to the complexing agent, when a solvent is used, the solvent may also remain. In this case, the content of the solvent is also the same as the numerical range of the content of the complexing agent.

In the description herein, the content of the complexing agent and the solvent to be used as necessary contained in the sulfide solid electrolyte was measured by dissolving the powder obtained in Examples or the like in a mixed solution of water and pentanol, measuring the solution using a gas chromatography device (GC), and quantitatively determining the complexing agent and the high boiling point solvent with an absolute calibration curve (GC calibration curve method).

(Collection of Powder)

The production method of the present embodiment preferably includes collecting the powder obtained by the heating after the heating in the heated air stream. The heating object becomes a powder obtained by removing the complexing agent from the electrolyte precursor by heating in the heated air stream, that is, a powder of the amorphous sulfide solid electrolyte. The powder (powder of the amorphous sulfide solid electrolyte) obtained by removing the complexing agent from the electrolyte precursor is floating in the heated air stream after heating in the heated air stream. Therefore, it is preferable to collect the powder floating in the heated air stream and then perform crystallization by heating, which will be described later, in view of the production process.

A bag filter is preferably used for collecting the powder floating in the heated air stream from the viewpoint of efficiently collecting the powder. By supplying the heated air stream containing the powder (powder of the amorphous sulfide solid electrolyte) obtained by removing the complexing agent from the electrolyte precursor after being heated in the heated air stream to the bag filter, the powder (powder of the amorphous sulfide solid electrolyte) obtained by removing the complexing agent from the electrolyte precursor can be collected. For example, in a case where a pneumatic conveying dryer is used, the powder can be collected by connecting the bag filter to the downstream of the pneumatic conveying dryer.

The filter used for the bag filter can be used without particular limitation, and examples thereof include filters made of materials such as polypropylene, nylon, acrylic, polyester, cotton, wool, heat-resistant nylon, polyamide polyimide, polyphenylene sulfide (PPS), glass fiber, and polytetrafluoroethylene (PTFE), and a filter with a function such as an electrostatic filter can also be used. Among these, a filter made of heat-resistant nylon, polyamide polyimide, polyphenylene sulfide (PPS), glass fiber, or polytetrafluoroethylene (PTFE) is preferred, a filter made of heat-resistant nylon, polyphenylene sulfide (PPS), or polytetrafluoroethylene (PTFE) is more preferred, and a filter made of polytetrafluoroethylene (PTFE) is particularly preferred.

The bag filter may have a shaking-off means, and preferred examples thereof include means by a pulsation back pressure system and a pulse jet system, and among them, means by a pulse jet system is preferred.

An induced draft fan may be provided in the line from the exhaust port of the bag filter in order to forcibly exhaust the gas exhausted from the exhaust port. By exhausting the gas by the induced draft fan, the filtration in the bag filter proceeds smoothly, and the slurry can be dried in a shorter time.

[Heating]

The production method of the present embodiment can include further heating after the heating in the heated air stream. By heating in the above-described heated air stream, an amorphous sulfide solid electrolyte is obtained from the electrolyte precursor. In a case where a crystalline sulfide solid electrolyte is to be obtained, the amorphous sulfide solid electrolyte can be converted into a crystalline sulfide solid electrolyte by further heating (hereinafter, also referred to as "post-heating") separately from heating in a heated air stream.

In addition, a complexing agent and a solvent used as necessary may remain in the amorphous sulfide solid electrolyte obtained by heating in the heated air stream. By further post-heating, the contents of the complexing agent and the solvent remaining in the amorphous sulfide solid electrolyte are reduced, so that the quality of the sulfide-based solid electrolyte is improved and high ionic conductivity is easily obtained. In addition, by heating in the heated air stream, the amorphous sulfide solid electrolyte may not be formed, and the electrolyte precursor may remain as it is. In this case, the complexing agent can be removed from the electrolyte precursor by post-heating, and a crystalline sulfide solid electrolyte is obtained via an amorphous sulfide solid electrolyte.

The heating temperature of the post-heating is not particularly limited as long as it is a temperature higher than the temperature of the substance obtained by removing the complexing agent from the electrolyte precursor by heating in the above-described heated air stream (that is, the sulfide solid electrolyte), and for example, the heating temperature may be determined according to the structure of the crystalline solid electrolyte obtained by heating the amorphous sulfide solid electrolyte obtained by removing the complexing agent from the electrolyte precursor. Here, the "temperature of the substance obtained by removing the complexing agent from the electrolyte precursor by heating in the heated air stream (that is, the sulfide solid electrolyte)" means, for example, in the case of using a pneumatic conveying dryer, the temperature of the sulfide solid electrolyte at the outlet of the pneumatic conveying dryer.

More specifically, the heating temperature of the post-heating may be in a range of preferably 5°C or higher, more preferably 10°C or higher, and still more preferably 20°C or higher from the temperature of the peak top of the exothermic peak observed on the lowest temperature side as a starting point when the amorphous solid electrolyte is subjected to differential thermal analysis (DTA) under a temperature rise condition of 10°C/min using a differential thermal analyzer (DTA apparatus), and the upper limit is not particularly limited, but may be about 40°C or lower. By setting the temperature in such a range, not only the crystalline solid electrolyte can be obtained more efficiently and reliably, but also the contents of the complexing agent and the solvent used as necessary remaining in the sulfide solid electrolyte can be reduced, and the purity of the sulfide solid electrolyte can be improved by reducing the content of the electrolyte precursor.

The heating temperature of the post-heating varies depending on the structure of the crystalline solid electrolyte to be obtained and cannot be unconditionally defined, but is usually preferably 130°C or higher, more preferably 140°C or higher, and still more preferably 150°C or higher, and the upper limit is not particularly limited, but is preferably 300°C or lower, more preferably 280°C or lower, and still more preferably 250°C or lower.

The heating time of the post-heating is not particularly limited as long as it is a time for obtaining a desired crystalline solid electrolyte, but is, for example, preferably 1 minute or more, more preferably 10 minutes or more, still more preferably 30 minutes or more, and yet still more preferably 1 hour or more. On the other hand, the upper limit of the heating time is not particularly limited, but is preferably 24 hours or less, more preferably 10 hours or less, still more preferably 5 hours or less, and yet still more preferably 3 hours or less.

The post-heating can be performed at normal pressure, but in order to reduce the heating temperature, the post-heating can also be performed under a reduced pressure atmosphere, and further under a vacuum atmosphere.

As the pressure condition, in the case of heating under a reduced pressure atmosphere, the pressure is preferably 85 kPa or less, more preferably 80 kPa or less, and still more preferably 70 kPa or less, and the lower limit may be vacuum (0 KPa), and in consideration of the ease of adjusting the pressure, the pressure is preferably 1 kPa or more, more preferably 2 kPa or more, and still more preferably 3 kPa or more. When the pressure condition is within the above range, the heating condition can be mild, and an increase in the size of the apparatus can be suppressed.

In addition, the post-heating is preferably performed in an inert gas atmosphere (for example, a nitrogen atmosphere or an argon atmosphere). This is because deterioration (for example, oxidation) of the crystalline solid electrolyte can be prevented.

The post-heating method is not particularly limited, and examples thereof include a method using a hot plate, a vacuum heating apparatus, an argon gas atmosphere furnace, and a firing furnace. Further, industrially, a horizontal dryer, or a horizontal vibrating fluidized dryer having a heating unit and a feed mechanism may be used, and they may be selected depending on the processing amount to be heated.

(Amorphous Sulfide Solid Electrolyte)

The sulfide solid electrolyte obtained by the production method of the present embodiment may be either an amorphous sulfide solid electrolyte or a crystalline sulfide solid electrolyte as desired. That is, when post-heating is not performed, an amorphous sulfide solid electrolyte is obtained, and when post-heating is performed, a crystalline sulfide solid electrolyte is obtained.

The amorphous sulfide solid electrolyte obtained by the production method of the present embodiment contains a lithium atom, a sulfur atom, a phosphorus atom, and a halogen atom, and representative examples thereof preferably include solid electrolytes composed of lithium sulfide, phosphorus sulfide, and a lithium halide, for example, $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr; and solid electrolytes further containing other atoms such as an oxygen atom and a silicon atom, for example, $Li_2S$-$P_2S_5$-$Li_2O$-LiI and $Li_2S$-$SiS_2$-$P_2S_5$-LiI. From the viewpoint of obtaining higher ionic conductivity, solid electrolytes composed of lithium sulfide, phosphorus sulfide, and a lithium halide, such as $Li_2S$-$P_2S_5$-LiI, $Li_2S$-$P_2S_5$-LiCl, $Li_2S$-$P_2S_5$-LiBr, and $Li_2S$-$P_2S_5$-LiI-LiBr, are preferred.

The types of atoms constituting the amorphous sulfide solid electrolyte can be determined by, for example, an ICP emission spectrophotometer.

When the amorphous sulfide solid electrolyte obtained by the production method of the present embodiment has at least $Li_2S$-$P_2S_5$, the molar ratio of $Li_2S$ and $P_2S_5$ is preferably 65 to 85 : 15 to 35 from the viewpoint of obtaining higher ionic conductivity, more preferably 70 to 80 : 20 to 30, and still more preferably 72 to 78 : 22 to 28.

When the amorphous sulfide solid electrolyte obtained by the production method of the present embodiment is, for example, $Li_2S$-$P_2S_5$-LiI-LiBr, the total content of lithium sulfide and diphosphorus pentasulfide is preferably 60 to 95 mol%, more preferably 65 to 90 mol%, and still more preferably 70 to 85 mol%. Further, the ratio of lithium bromide with respect to the total of lithium bromide and lithium iodide is preferably 1 to 99 mol%, more preferably 20 to 90 mol%, still more preferably 40 to 80 mol%, and particularly preferably 50 to 70 mol%.

In the amorphous sulfide solid electrolyte obtained by the production method of the present embodiment, the blending ratio (molar ratio) of lithium atoms, sulfur atoms, phosphorus atoms, and halogen atoms is 1.0 to 1.8 : 1.0 to 2.0 : 0.1 to 0.8 : 0.01 to 0.6 is preferable, more preferably 1.1 to 1.7 : 1.2 to 1.8 : 0.2 to 0.6 : 0.05 to 0.5, and still more preferably 1.2 to 1.6 : 1.3 to 1.7 : 0.25 to 0.5 : 0.08 to 0.4. Further, when bromine and iodine are used together as halogen atoms, the blending ratio (molar ratio) of lithium atoms, sulfur atoms, phosphorus atoms, bromine, and iodine is preferably 1.0 to 1.8 : 1.0 to 2.0 : 0.1 to 0.8 : 0.01 to 0.3 : 0.01 to 0.3, more preferably 1.1 to 1.7 : 1.2 to 1.8 : 0.2 to 0.6 : 0.02 to 0.25 : 0.02 to 0.25, still more preferably 1.2 to 1.6 : 1.3 to 1.7 : 0.25 to 0.5 : 0.03 to 0.2 : 0.03 to 0.2, yet still more preferably 1.35 to 1.45 : 1.4 to 1.7 : 0.3 to 0.45 : 0.04 to 0.18 : 0.04 to 0.18. By setting the blending ratio (molar ratio) of lithium atoms, sulfur atoms, phosphorus atoms, and halogen atoms within the above range, it becomes easier to obtain a solid electrolyte with higher ionic conductivity having a thio-LISICON Region II type crystal structure described below.

The shape of the amorphous sulfide solid electrolyte is not particularly limited, and examples thereof include a particle shape.

The average particle diameter ($D_{50}$) of the particle shaped amorphous sulfide solid electrolyte is, for example, 0.01 μm or more, further 0.03 μm or more, 0.05 μm or more, and 0.1 μm or more, and the upper limit is 5 μm or less, further 3.0 μm or less, 1.5 μm or less, 1.0 μm or less, and 0.5 μm or less. As described above, the sulfide solid electrolyte obtained by the production method of the present embodiment does not use a jacket type heater (such as a vibration dryer) that has been conventionally used for removing complexing agents, therefore the generation of secondary particles due to aggregation of primary particles is suppressed, and the average particle diameter becomes small as the above range.

Therefore, in the production method of the present embodiment, there is no need to perform pulverization (atomization) treatment.

(Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a $Li_3PS_4$ crystal structure, a $Li_4P_2S_6$ crystal structure, a $Li_7PS_6$ crystal structure, a $Li_7P_3S_{11}$ crystal structure, and a crystal structure having peaks in the vicinity of $2\theta = 20.2°$ and in the vicinity of 23.6° (for example, JP 2013-16423 A).

Examples also include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725). The crystal structure of the crystalline sulfide solid electrolyte obtained by the production method of the present embodiment is preferably the thio-LISICON Region II type crystal structure among above, from the viewpoint of obtaining higher ionic conductivity. Herein, the term "thio-LISICON Region II type crystal structure" refers to either a $Li_{4-x}Ge_{1-x}P_xS_4$ system thio-LISICON Region II type crystal structure or a crystal structure similar to the $Li_{4-x}Ge_{1-x}P_xS_4$ system thio-LISICON Region II type.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structures is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline $Li_3PS_4$ ($\beta$-$Li_3PS_4$).

In the X-ray diffractometry using $CuK\alpha$ line, the diffracted peak of the $Li_3PS_4$ crystal structure appears, for example, in the vicinity of $2\theta = 17.5°$, 18.3°, 26.1°, 27.3°, and 30.0°, the diffracted peak of the $Li_4P_2S_6$ crystal structure appears, for example, in the vicinity of $2\theta = 16.9°$, 27.1 °, and 32.5°, the diffraction peak of the $Li_7PS_6$ crystal structure appears, for example, in the vicinity of $2\theta = 15.3°$, 25.2°, 29.6°, and 31.0°, the diffraction peak of the $Li_7P_3S_{11}$ crystal structure appears, for example, in the vicinity of $2\theta = 17.8°$, 18.5°, 19.7°, 21.8°, 23.7°, 25.9°, 29.6°, and 30.0°, the diffraction peak of the $Li_{4-x}Ge_{1-x}P_xS_4$ system thio-LISICON Region II type crystal structure appears, for example, in the vicinity of $2\theta = 20.1°$, 23.9°, and 29.5°, and the diffraction peak of the crystal structure similar to the $Li_{4=x}Ge_{1-x}P_xS_4$ system thio-LISICON Region II type appears, for example, in the vicinity of $2\theta = 20.2°$ and 23.6°. Note that these peak positions may be shifted back and forth within a range of $\pm 0.5°$.

A crystalline sulfide solid electrolyte having the argyrodite type crystal structure having the structural skeleton of the above-described $Li_7PS_6$, in which a part of P is substituted with Si, is also preferred.

Examples of the compositional formulas of the argyrodite type crystal structure include crystal structures represented by the compositional formulas $Li_{7-x}P_{1-y}Si_yS_6$ and $Li_{7+x}P_{1-y}Si_yS_6$ (x is -0.6 to 0.6, and y is 0.1 to 0.6). The argyrodite type crystal structure represented by this compositional formula is a cubic or orthorhombic, preferably a cubic crystal, and has peaks mainly appearing at positions of $2\theta = 15.5°$, 18.0°, 25.0°, 30.0°, 31.4°, 45.3°, 47.0°, and 52.0° in X-ray diffractometry using $CuK\alpha$ line.

Examples of the compositional formula of argyrodite type crystal structure include a compositional formula of $Li_{7-x-2y}PS_{6-x-y}Cl_x$ ($0.8 \leq x \leq 1.7$, $0 < y \leq -0.25x + 0.5$). The argyrodite type crystal structure represented by this compositional formula is preferably a cubic crystal, and has peaks mainly appearing at positions of $2\theta = 15.5°$, 18.0°, 25.0°, 30.0°, 31.4°, 45.3°, 47.0°, and 52.0° in X-ray diffractometry using $CuK\alpha$ line.

Further, examples of the compositional formula of the argyrodite type crystal structure include $Li_{7-x}PS_{6-x}Ha_x$ (Ha is Cl or Br, x is preferably 0.2 to 1.8). The argyrodite type crystal structure represented by this compositional formula is preferably a cubic crystal, and has peaks mainly appearing at positions of $2\theta = 15.5°$, 18.0°, 25.0°, 30.0°, 31.4°, 45.3°, 47.0°, and 52.0° in X-ray diffractometry using $CuK\alpha$ line.

Note that these peak positions may be shifted back and forth within a range of $\pm 0.5°$.

(Content of Complexing Agent)

By further heating after the removing, the content of the complexing agent contained in the crystalline sulfide solid electrolyte becomes smaller than the content of the complexing agent contained in the amorphous sulfide solid electrolyte.

The content of the complexing agent contained in the crystalline sulfide solid electrolyte is preferably 0% by mass, that is, it is preferably that no complexing agent is contained at all, however from the viewpoint of obtaining a sulfide solid electrolyte having high ionic conductivity more efficiently, it is usually 10% by mass or less, further 8% by mass or less, 5% by mass or less, 3 % by mass or less, and 1 % by mass or less, and the lower limit is about 0.01% by mass or more.

In addition, similar to the complexing agent, when a solvent is used, the solvent may also remain. In this case, the content of the solvent is also the same as the numerical range of the content of the complexing agent.

The shape of the crystalline sulfide solid electrolyte is not particularly limited, and examples thereof include a particle shape.

The average particle diameter ($D_{50}$) of the particle shaped crystalline sulfide solid electrolyte is, for example, 0.01 $\mu$m or more, further 0.03 $\mu$m or more, 0.05 $\mu$m or more, and 0.1 $\mu$m or more, and the upper limit is 5 $\mu$m or less, further 3.0 $\mu$m or less, 1.5 $\mu$m or less, 1.0 $\mu$m or less, and 0.5 $\mu$m or less. As described above, the sulfide solid electrolyte obtained by the production method of the present embodiment does not use a jacket type heater (such as a vibration dryer) that has been conventionally used for removing complexing agents, therefore the generation of secondary particles due to aggregation of primary particles is suppressed, and the average particle diameter becomes small as the above range.

Therefore, in the production method of the present embodiment, there is no need to perform pulverization (atomization) treatment.

Further, the specific surface area of the sulfide solid electrolyte obtained by the production method of the present embodiment is usually 10 $m^2$/g or more, further 15 $m^2$/g or more, 20 $m^2$/g or more, or 25 $m^2$/g or more. The upper limit is not particularly limited, and for example, about 50 $m^2$/g or less. In the description herein, the specific surface area is a value measured by the BET method (gas adsorption method), and nitrogen may be used as the gas (nitrogen method), krypton also may be used as the gas (krypton method), it is appropriately selected and measured depending on the size of the specific surface area.

(Application)

The sulfide solid electrolyte obtained by the production method of the present embodiment has high ionic conductivity and excellent battery performance, and thus is suitably used for a battery.

The sulfide solid electrolyte of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au can be used.

Examples

Hereinafter, the present invention will be specifically described with reference to Examples, but the present invention is not limited to these Examples.

(Measurement of Powder XRD Diffraction)

Powder X-ray diffraction (XRD) measurement was performed as follows.

Each of the powders of the sulfide solid electrolyte obtained in Examples and Comparative Examples was filled in a groove having a diameter of 20 mm and a depth of 0.2 mm, and was leveled with glass to obtain a sample. This sample was sealed with a Kapton film for XRD and measured under the following conditions without being exposed to air.

Measuring apparatus: D2 PHASER, manufactured by Bruker Co., Ltd.

Tube voltage: 30 kV
Tube current: 10 mA
X-ray wavelength: Cu-K$\alpha$ line (1.5418 Å)
Optical system: concentration method
Slit configuration: Using solar slit 4°, divergence slit 1 mm, K$\beta$ filter (Ni plate) used
Detector: semiconductor detector
Measurement range: $2\theta$ = 10 to 60 deg
Step width, scan speed: 0.05 deg, 0.05 deg/sec

(Measurement of Ionic Conductivity)

In the present examples, the ionic conductivity was measured as follows.

Circular pellets having diameters 10 mm (cross-sectional area S: 0.785 $cm^2$) and heights (L) of 0.1 to 0.3 cm were molded from the crystalline solid electrolytes obtained in Example and Comparative example, to obtain samples. Electrode terminals were taken from the top and bottom of the sample, and measured by an AC impedance method at 25°C (frequency range: 5 MHz to 0.5 Hz, amplitude: 10 mV), and a Cole-Cole plot was obtained. The real part Z' ($\Omega$) at the point where -Z'' ($\Omega$) becomes minimum in the vicinity of the right end of an arc observed in a region on the high frequency side was defined as the bulk resistance R ($\Omega$) of the electrolyte, and the ionic conductivity $\sigma$ (S/cm) was calculated according to the following equations.

$$R = \rho(L/S)$$

$$\sigma = 1/\rho$$

(Measurement of Content of Complexing Agent contained in Sulfide Solid Electrolyte)

The content of the complexing agent contained in the sulfide solid electrolyte was measured using a gas chromatography apparatus (GC). The outline of the measurement is that a powder of a sulfide solid electrolyte and the like decomposed with a mixture of water and pentanol (content of pentanol in the mixture: 90% by volume) is measured by GC, and the complexing agent is quantitated using an absolute calibration curve.

First, 0.1 g of the sample is accurately weighed and placed in a vial. 10 mL of a mixture of water and pentanol is placed into a vial to completely decompose and dissolve the sample. Approximately 1.5 mL of the dissolved sample is placed into a GC vial, covered with a lid, and stopped with a crimper. The GC vial is set on the GC autosampler to be measured. For the calibration curve, 0.5 g of the complexing agent to be used is weighed out, and the volume is adjusted to 50 mL (equivalent to 10,000 $\mu$g/mL) by a mixture of water and pentanol. This is diluted and adjusted to 2500, 1000, 250, 25, 2.5 $\mu$g/ml (standard solution) and measured by GC, and a calibration curve is prepared using the least squares method from the peak area and the concentration of the standard solution. The GC peak area value of the sample solution was applied to the calibration curve, and the concentration in the sample solution was calculated according to the following formula.

Content of complexing agent in powder of a sulfide solid electrolyte and the like (% by mass) = [concentration determined from calibration curve ($\mu$g/ml) $\times$ amount of mixture of water and pentanol used for sample dissolution (10 mL) ] $\div$ sample amount (g)

(Preparation Example: Preparation of Electrolyte Precursor)

The electrolyte precursors used in Examples and Comparative Examples were prepared by the following method. Here, the amounts of the solid electrolyte raw material and the complexing agent used were set to the amounts required in each of Examples and Comparative Examples while the ratio of the amounts used described in the following method was the same.

Into a 1-liter reaction tank equipped with stirring blades, 13.19 g of lithium sulfide, 21.26 g of diphosphorus pentasulfide, 4.15 g of lithium bromide, and 6.40 g of lithium iodide (total amount of solid electrolyte raw materials: 45 g) were introduced under a nitrogen atmosphere. To this, 100 mL of tetramethylethylenediamine (TMEDA) as a complexing agent and 800 mL of cyclohexane as a solvent were added, and a stirring blade was operated to perform mixing by stirring at 30°C for 72 hours. Into a bead mill which is capable of circulation operation ("LABSTAR Mini LMZ015 (trade name)", manufactured by Ashizawa Finetech Ltd.), 456 g of zirconia balls (diameter: 0.5 mm$\varphi$) (bead filling rate with respect to the grinding chamber: 80%) was charged, pulverized for 60 minutes while circulating between the reaction tank and the grinding chamber under the conditions of pump flow rate: 550 mL/min, circumferential speed: 8 m/s, and mill jacket temperature: 20°C, to obtain a slurry of the electrolyte precursor (complex). Next, the obtained slurry was immediately dried under vacuum at room temperature (23°C) to obtain a powder of an electrolyte precursor (complex). The content of the complexing agent contained in the obtained powder of the electrolyte precursor (complex) was 55% by mass.

(Pneumatic Conveying Dryer)

The powder of the electrolyte precursor obtained in the above-described Preparation Example was heated in the heated air stream using an apparatus having a configuration shown in the schematic diagram of the apparatus used for heating in the heated air stream of Fig. 1. The apparatus shown in Fig. 1 is an apparatus mainly including a pneumatic conveying dryer (which is a cylindrical container type pneumatic conveying dryer) and a bag filter, and includes a blower and a heater for supplying the heated air stream, and a mixer for pneumatically transporting the heating object by gas. In addition, although not shown, a feeder capable of supplying the heating object in a state of powder or slurry may be provided (not shown).

In the apparatus shown in Fig. 1, the electrolyte precursor (heating object) is pneumatically transported to the lower portion of the pneumatic conveying dryer in the form of gas, and a heated air stream obtained by heating the gas with a heater is supplied from the bottom portion of the pneumatic conveying dryer. The heating object heated in the heated air stream in the pneumatic conveying dryer becomes a powder (powder of amorphous sulfide) obtained by removing the complexing agent from the electrolyte precursor, and the heated air stream containing the powder is supplied to a bag filter downstream. The powder (powder of amorphous sulfide) obtained by removing the complexing agent from the electrolyte precursor is collected by the bag filter, and the heated air stream after the powder is collected is exhausted as it is.

(Example 1)

Nitrogen heated to 115°C was used as a heated air stream in the pneumatic conveying dryer, and supply to the pneumatic conveying dryer was started at 1 $m^3$/min. Next, the powder of the obtained electrolyte precursor was pneumatically transported to the pneumatic conveying dryer using 10.5 L/min of nitrogen at a supply amount of 4.2 g/min using a table feeder. The heating object (powder of electrolyte precursor) was heated in a heated air stream using a pneumatic conveying dryer, and the heated air stream discharged from the pneumatic conveying dryer was supplied to a bag filter to collect a powder (amorphous sulfide solid electrolyte) obtained by removing the complexing agent from the electrolyte precursor, which was contained in the heated air stream, and this was continued for 50 minutes (that is, the operation time was 50 minutes). The temperature of the heated air stream at the outlet of the pneumatic conveying dryer was 109°C, and the temperature of the heated air stream at the inlet of the bag filter was 61°C. The content of the complexing agent contained in the collected powder (amorphous sulfide solid electrolyte) was 43% by mass.
The powder (amorphous sulfide solid electrolyte) obtained by removing the complexing agent from the obtained electrolyte precursor was heated (post-heated) in a Schlenk tube at 110°C for 2 hours and further at 160°C for 2 hours, thereby obtaining a crystalline sulfide solid electrolyte.

(Examples 2 and 3)

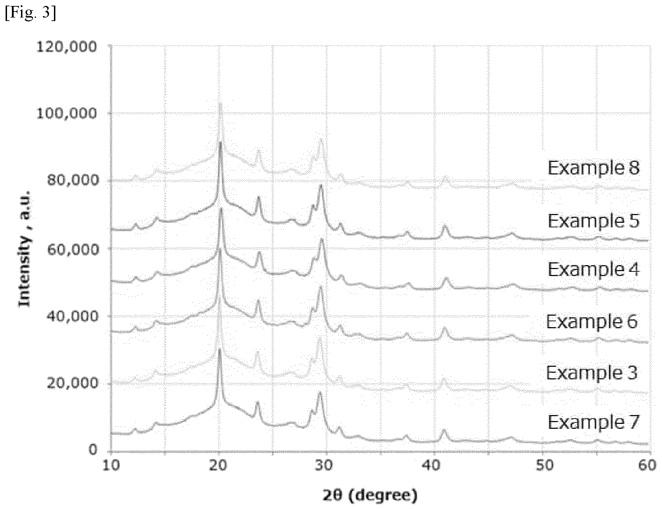

Powder was collected in the same manner as in Example 1, except that in Example 1, the temperature and the supply amount of the heated air stream supplied to the pneumatic conveying dryer, the operation time, and the supply amount of the powder of the electrolyte precursor were set to the numerical values shown in Table 1. The outlet temperature of the pneumatic conveying dryer, the bag filter inlet temperature, and the content of the complexing agent contained in the collected powder (amorphous sulfide solid electrolyte) are shown in Table 1.
The ionic conductivity of the crystalline sulfide solid electrolyte obtained in Example 3 was measured and found to be 4.0 (mS/cm). In addition, the crystalline sulfide solid electrolyte obtained in Example 3 was subjected to powder XRD diffraction measurement. The X-ray diffraction spectra are shown in Figs. 2 and 3. As shown in Figs. 2 and 3, crystallization peaks were mainly detected at $2\theta$ = 20.2° and 23.6° in the X-ray diffraction spectrum, and it was confirmed that the solid electrolyte was a crystalline sulfide solid electrolyte having a thio-LISICON Region II type crystal structure.

(Examples 4 to 8)

Powder was collected in the same manner as in Example 1, except that in Example 1, the temperature and the supply amount of the heated air stream supplied to the pneumatic conveying dryer, the operation time, and the supply amount of the powder of the electrolyte precursor were set to the numerical values shown in Table 1. The outlet temperature of the pneumatic conveying dryer, the bag filter inlet temperature, and the content of the complexing agent contained in the collected powder (amorphous sulfide solid electrolyte) are shown in Table 1.
In addition, the crystalline sulfide solid electrolytes obtained in Examples 4 to 8 were subjected to powder XRD diffraction measurement. The X-ray diffraction spectra are shown in Fig. 3. As shown in Fig. 3, crystallization peaks were mainly detected at $2\theta$ = 20.2° and 23.6° in the X-ray diffraction spectrum, and it was confirmed that the solid electrolyte was a crystalline sulfide solid electrolyte having a thio-LISICON Region II type crystal structure.

Table 1

| | | Examples | | | | | | | |
|---|---|---|---|---|---|---|---|---|---|
| | | 1 | 2 | 3 | 4 | 5 | 6 | 7 | 8 |
| Electrolyte precursor supply amount: $W_1$ | g/min | 4.2 | 4.4 | 5.1 | 1.1 | 3.2 | 1.2 | 5.0 | 3.1 |
| Heated air stream | | | | | | | | | |
| Supply amount: $W_2$ | $m^3$/min | 1.0 | 1.0 | 1.0 | 0.5 | 0.5 | 0.5 | 1.0 | 0.5 |
| Supply temperature | °C | 115 | 125 | 150 | 130 | 130 | 140 | 140 | 140 |
| Outlet temperature | °C | 109 | 119 | 140 | 120 | 120 | 130 | 132 | 130 |
| Flow velocity in pneumatic conveying dryer | m/s | 2.9 | 3.0 | 3.2 | 1.5 | 1.5 | 1.6 | 3.1 | 3.1 |

(continued)

| | | Examples | | | | | | | |
|---|---|---|---|---|---|---|---|---|---|
| | | 1 | 2 | 3 | 4 | 5 | 6 | 7 | 8 |
| Heating time | see | 0.4 | 0.4 | 0.4 | 0.8 | 0.8 | 0.8 | 0.4 | 0.4 |
| Bag filter inlet temperature | °C | 61 | 67 | 75 | 57 | 58 | 62 | 52 | 62 |
| Operation time | min | 50 | 45 | 38 | 98 | 62 | 80 | 41 | 64 |
| $W_1/W_2$ | g/m$^3$ | 4.2 | 4.4 | 5.1 | 2.2 | 6.4 | 2.4 | 5.0 | 6.2 |
| Electrolyte precursor total supply amount | g | 208 | 199 | 196 | 103 | 200 | 97 | 205 | 200 |
| Complexing agent content | | | | | | | | | |
| Pneumatic conveying dryer inlet | % by mass | 55 | 55 | 55 | 55 | 55 | 55 | 55 | 55 |
| Pneumatic conveying dryer outlet | % by mass | 43 | 39 | 23 | 24 | 33 | 18 | 22 | 27 |

From the results of the Examples, it was confirmed that by heating in the heated air stream, the content of the complexing agent in the pneumatic conveying dryer outlet can be reduced in an extremely short time, and a high-quality sulfide solid electrolyte having few impurities and high ionic conductivity can be obtained.

In addition, it was confirmed that the content of the complexing agent at the pneumatic conveying dryer outlet is decreased as the supply temperature of the heated air stream is increased, and that the content of the complexing agent at the pneumatic conveying dryer outlet is decreased as the supply amount of the heated air stream is increased with respect to the electrolyte precursor. With this as a standard, the operating conditions can be adjusted according to the performance required for the sulfide solid electrolyte.

(Comparative Example 1)

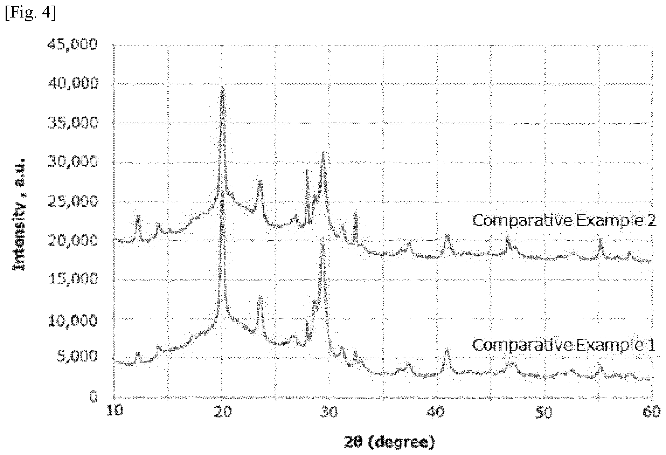

Using a vibration dryer ("VH-10 (model number)", manufactured by Chuo Kakohki Co., Ltd.), 350 g of the powder of the electrolyte precursor obtained in the above Preparation Example was heated at 110°C for 7 hours under vacuum to obtain an amorphous sulfide solid electrolyte, and further heated at 170°C for 2 hours under vacuum to obtain a crystalline sulfide solid electrolyte. The obtained crystalline sulfide solid electrolyte was subjected to powder XRD diffraction measurement. The X-ray diffraction spectrum is shown in Fig. 4.

(Comparative Example 2)

A crystalline sulfide solid electrolyte was obtained in the same manner as in Comparative Example 1 except that 350 g of the powder of the electrolyte precursor in Comparative Example 1 was changed to 550 g. The obtained crystalline sulfide solid electrolyte was subjected to powder XRD diffraction measurement. The X-ray diffraction spectrum is shown in Fig. 4.

According to the results shown in Fig. 4, since crystallization peaks were detected at $2\theta = 20.2°$ and $23.6°$ in the crystalline sulfide solid electrolytes obtained in Comparative Examples 1 and 2, it can be said that the crystalline sulfide solid electrolytes obtained in Comparative Examples 1 and 2 have a thio-LISICON Region II type crystal structure. However, a crystallization peak attributable to a halogen atom (lithium bromide) was also detected at $2\theta = 28°$, and the solid electrolyte contained many impurities and was not excellent in quality. In addition, the ionic conductivity of Comparative Example 1 was 3.7 (mS/cm), and it was confirmed that the ionic conductivity decreased due to a large amount of impurities. Regarding Comparative Example 2, since it is clear from the X-ray diffraction spectrum that the amount of impurities is large and the ionic conductivity is low, the ionic conductivity was not measured.

In addition, since the amount of the crystallization peak at $2\theta = 28°$ is larger in Comparative Example 2 in which the amount of the electrolyte precursor is large, it was confirmed that it is difficult to cope with mass production when heating in a heated air stream employed in the production method of the present embodiment is not performed.

(Comparative Example 3)

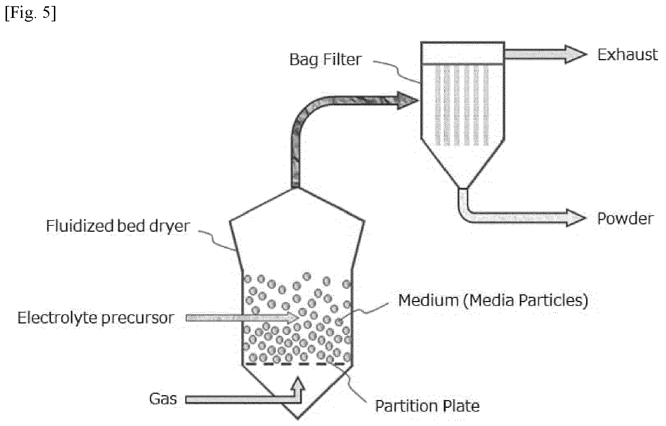

A crystalline sulfide solid electrolyte was obtained in the same manner as in Example 1 except that in Example 1, the slurry obtained in Preparation Example was used and the apparatus equipped with the pneumatic conveying dryer and the bag filter shown in Fig. 1 was replaced with an apparatus equipped with a fluidized bed dryer and a bag filter using media particles shown in Fig. 5.

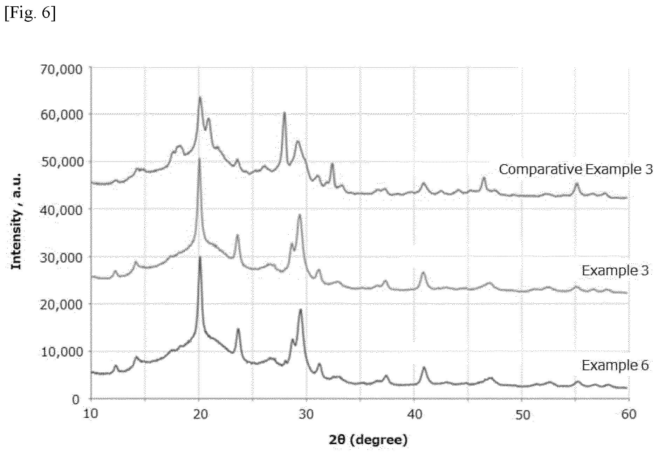

Here, the supply temperature of nitrogen to the fluidized bed dryer was 147°C, the supply amount was 2.4 m/s (which is a flow velocity in a cross section of a fluidized bed of a medium (media particles) having a diameter of 98 mm, and at 147°C), and the slurry was supplied such that the temperature of the fluid containing gas and powder extracted from the upper side of the fluidized bed dryer was 110°C. Ceramic particles having a particle diameter of 2 mm were used as media particles, and the filling ratio of the ceramic particles was 30% by volume based on the volume of the fluidized bed dryer. After the operation of the fluidized bed dryer entered a steady state, drying was continued for 48 hours, and the powder collected by the bag filter was heated at 110°C for 2 hours under vacuum, and further heated at 180°C for 2 hours under vacuum to obtain a crystalline solid electrolyte. The obtained crystalline sulfide solid electrolyte was subjected to powder XRD diffraction measurement. The X-ray diffraction spectrum is shown in Fig. 6. In addition, X-ray diffraction spectra of Examples 3 and 6 are also shown in Fig. 6 for comparative reference.

(Examples 9 to 15)

Powder was collected in the same manner as in Example 1, except that in Example 1, the temperature and the supply amount of the heated air stream supplied to the pneumatic conveying dryer, the operation time, and the supply amount of the powder of the electrolyte precursor were set to the numerical values shown in Table 2. The outlet temperature of the pneumatic conveying dryer, the bag filter inlet temperature, and the content of the complexing agent contained in the collected powder (amorphous sulfide solid electrolyte) are shown in Table 2.

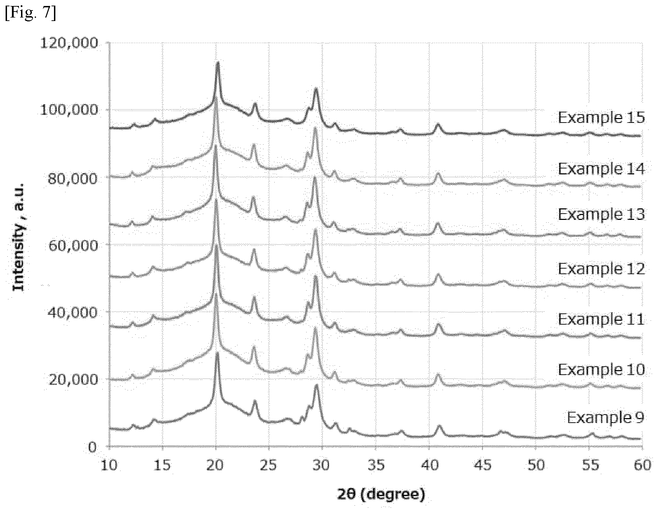

In addition, the crystalline sulfide solid electrolytes obtained in Examples 9 to 15 were subjected to powder XRD diffraction measurement. The X-ray diffraction spectra are shown in Fig. 7. As shown in Fig. 7, crystallization peaks were mainly detected at $2\theta = 20.2°$ and $23.6°$ in the X-ray diffraction spectrum, and it was confirmed that the solid electrolyte was a crystalline sulfide solid electrolyte having a thio-LISICON Region II type crystal structure.

Table 2

| | | Examples | | | | | | |
|---|---|---|---|---|---|---|---|---|
| | | 9 | 10 | 11 | 12 | 13 | 14 | 15 |
| Electrolyte precursor supply amount: $W_1$ | g/min | 25.1 | 66.9 | 71.2 | 36.0 | 105.6 | 108.7 | 49.9 |
| Heated air stream | | | | | | | | |
| Supply amount: $W_2$ | $m^3$/min | 2.6 | 2.6 | 2.6 | 2.6 | 2.6 | 2.6 | 2.6 |
| Supply temperature | °C | 140 | 140 | 135 | 135 | 142 | 140 | 140 |
| Outlet temperature | °C | 131 | 127 | 125 | 127 | 127 | 125 | 129 |
| Flow velocity in pneumatic conveying dryer | m/s | 19.7 | 19.7 | 19.7 | 19.7 | 19.7 | 19.7 | 19.7 |
| Heating time | sec | 0.25 | 0.25 | 0.25 | 0.25 | 0.25 | 0.25 | 0.25 |
| Bag filter inlet temperature | °C | 115 | 113 | 113 | 114 | 112 | 110 | 120 |
| Operation time | min | 90 | 60 | 70 | 105 | 55 | 55 | 70 |
| $W_1/W_2$ | $g/m^3$ | 9.7 | 25.7 | 27.4 | 13.8 | 40.6 | 41.8 | 19.2 |
| Electrolyte precursor total supply amount | g | 2260 | 4010 | 4985 | 3780 | 5800 | 5980 | 3500 |
| Complexing agent content | | | | | | | | |
| Pneumatic conveying dryer inlet | % by mass | 55 | 55 | 55 | 55 | 55 | 55 | 55 |
| Pneumatic conveying dryer outlet | % by mass | 19 | 24 | 33 | 28 | 36 | 28 | 17 |

Examples 9 to 15 are examples in which the supply amount of the electrolyte precursor was increased as compared with Examples 1 to 8. From the results of Examples 9 to 15, it was confirmed that even in a case where the scale was increased, by performing heating in the heated air stream while maintaining the supply amount of the heated air stream, in particular, the flow velocity within a certain range, the content of the complexing agent in the pneumatic conveying dryer outlet can be reduced in an extremely short time, and a high-quality sulfide solid electrolyte having few impurities and high ionic conductivity can be obtained.

Industrial Applicability

According to the method for producing a sulfide solid electrolyte of the present embodiment, a sulfide solid electrolyte having high ionic conductivity can be efficiently produced. In addition, since the heating is performed using the heated air stream, the complexing agent can be removed from the electrolyte precursor-containing substance regardless of the scale by maintaining the supply amount of the heated air stream, particularly, the flow velocity, in a certain range, and thus, it is possible to easily cope with the problem.

The sulfide solid electrolytes of the present embodiment obtained by the production method of the present embodiment are suitably used for batteries, in particular, batteries used for information-related devices such as personal computers, video cameras, and mobile phones, and communication devices.

**Claims**

1.  A method for producing a sulfide solid electrolyte, comprising:

    obtaining an electrolyte precursor-containing substance by mixing a raw material-containing substance containing a lithium atom, a phosphorus atom, a sulfur atom, and a halogen atom with a complexing agent; and then heating the electrolyte precursor-containing substance in a heated air stream.

2.  The method for producing a sulfide solid electrolyte according to claim 1, comprising drying the electrolyte precursor-containing substance.

3.  The method for producing a sulfide solid electrolyte according to claim 1 or 2, wherein a temperature of the heated air stream is 100°C or higher and 180°C or lower.

4.  The method for producing a sulfide solid electrolyte according to any one of claims 1 to 3, wherein a supply amount of the heated air stream is 0.1 m$^3$/min or more and 500 m$^3$/min or less.

5.  The method for producing a sulfide solid electrolyte according to any one of claims 1 to 4, wherein a flow velocity of the heated air stream is 5 m/s or more and 35 m/s or less.

6.  The method for producing a sulfide solid electrolyte according to any one of claims 1 to 5, wherein the heating in the heated air stream is performed for 0.1 seconds or more and 1 minute or less.

7.  The method for producing a sulfide solid electrolyte according to any one of claims 2 to 6, wherein the drying is performed at a temperature of 5°C or higher and 110°C or lower under normal pressure or reduced pressure.

8.  The method for producing a sulfide solid electrolyte according to any one of claims 1 to 7, further comprising: heating after the heating in the heated air stream.

9.  The method for producing a sulfide solid electrolyte according to any one of claims 1 to 8, wherein the complexing agent is a compound having an amino group.

10. The method for producing a sulfide solid electrolyte according to any one of claims 1 to 9, wherein the complexing agent is a compound having at least two tertiary amino groups in the molecule.

11. The method for producing a sulfide solid electrolyte according to any one of claims 1 to 10, wherein media particles are not used in the heating in the heated air stream.

12. The method for producing a sulfide solid electrolyte according to any one of claims 1 to 11, wherein the sulfide solid electrolyte has a thio-LISICON Region II type crystal structure.

[Fig. 1]

[Fig. 2]

[Fig. 3]

[Fig. 4]

[Fig. 5]

[Fig. 6]

[Fig. 7]

**INTERNATIONAL SEARCH REPORT**

| International application No. |
|---|
| **PCT/JP2023/025368** |

**A. CLASSIFICATION OF SUBJECT MATTER**

*H01B 13/00*(2006.01)i; *H01G 9/00*(2006.01)i; *H01G 9/025*(2006.01)i; *H01G 11/56*(2013.01)i
FI: H01B13/00 Z; H01G9/025; H01G9/00 290F; H01G11/56

According to International Patent Classification (IPC) or to both national classification and IPC

**B. FIELDS SEARCHED**

Minimum documentation searched (classification system followed by classification symbols)

H01B13/00; H01G9/00; H01G9/025; H01G11/56

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/230189 A1 (IDEMITSU KOSAN CO., LTD.) 18 November 2021 (2021-11-18) paragraphs [0113]-[0123], fig. 1-4 | 1-12 |

☐ Further documents are listed in the continuation of Box C. ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 September 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/025368**

| Patent document cited in search report | | | Publication date (day/month/year) | Patent family member(s) | | | Publication date (day/month/year) |
|---|---|---|---|---|---|---|---|
| WO | 2021/230189 | A1 | 18 November 2021 | EP | 4152464 | A1 | |
| | | | | paragraphs [0148]-[0166], fig. 1-4 | | | |
| | | | | CN | 115552553 | A | |
| | | | | KR 10-2023-0008725 | | A | |

Form PCT/ISA/210 (patent family annex) (January 2015)

**EP 4 557 317 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014191899 A
- WO 2014192309 A
- WO 2018054709 A
- WO 2020105737 A
- WO 2021230189 A
- JP 2013016423 A

**Non-patent literature cited in the description**

- *CHEMISTRY OF MATERIALS*, 2017, vol. 29, 1830-1835
- *Aust. J. Chem.*, 1988, vol. 41, 1925-34
- Chemistry Handbook. Maruzen Publishing Co., Ltd., 2004
- **KANNO et al.** *Journal of The Electrochemical Society*, 2001, vol. 148 (7), A742-746
- *Solid State Ionics*, 2006, vol. 177, 2721-2725